(19) **Europäisches Patentamt**
**European Patent Office**
**Office européen des brevets**

(11) **EP 3 481 116 B1**

(12) **EUROPEAN PATENT SPECIFICATION**

(45) Date of publication and mention
of the grant of the patent:
**18.08.2021  Bulletin 2021/33**

(51) Int Cl.:
***H04W 68/06*** *(2009.01)*   ***H04W 84/04*** *(2009.01)*
***H04W 88/14*** *(2009.01)*

(21) Application number: **17199964.2**

(22) Date of filing: **03.11.2017**

(54) **METHOD AND APPARATUSES FOR PAGING A MOBILE TERMINAL IN A MOBILE CELLULAR NETWORK**

VERFAHREN UND VORRICHTUNGEN FÜR FUNKRUF AN EIN MOBILES ENDGERÄT IN EINEM MOBILEN ZELLULAREN NETZWERK

PROCÉDÉ ET DISPOSITIFS DE PAGINATION D'UN TERMINAL MOBILE DANS UN RÉSEAU CELLULAIRE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.05.2019  Bulletin 2019/19**

(73) Proprietor: **Telefónica Germany GmbH & Co. OHG
80992 München (DE)**

(72) Inventors:
• **Müllner, Robert
81479 München (DE)**
• **Leth-Espensen, Mads
82110 Germering (DE)**

• **Seitz, Alexander
81247 München (DE)**
• **Hetze, Christian
87616 Marktoberdorf-Bertoldshofen (DE)**
• **Widder, Wolfgang
82362 Weilheim (DE)**

(74) Representative: **Herrmann, Uwe
Lorenz Seidler Gossel
Rechtsanwälte Patentanwälte
Partnerschaft mbB
Widenmayerstraße 23
80538 München (DE)**

(56) References cited:
**WO-A1-01/45449       WO-A1-2008/011779
US-A1- 2008 293 437   US-A1- 2014 155 109**

EP 3 481 116 B1

**Description**

The present invention is related to a method, a mobile cellular network and a paging platform for paging a mobile terminal in a mobile cellular network.

Cellular networks like the 3rd Generation Partnership Project (3GPP) Global System for Mobile Communications (GSM), Universal Mobile Telecommunications System (UMTS), Long Term Evolution (LTE), or the 5th Generation (5G) consist of a plurality of cells from and to which moving subscribers are handed over while service continuity is provided. When the service is terminated and the active connection is released, the user might continue to move and its location is not known when the network wants to establish a new connection to this subscriber. To get information of the location of this mobile subscriber, a so-called paging procedure is used that is standardised by 3GPP. The paging procedure is similar for all above mentioned network technologies and is explained in the following for the GSM network.

Paging is done for a Mobile Terminated Call (MTC) or a data service that is directed to this subscriber, e.g. receiving an e-mail, a message, or a command associated with Internet of Things (IoT) applications. The paging procedure is initiated by the network by broadcasting a paging request message. For the example of GSM networks, this message is broadcast on the Common Control Channel (CCCH) for Circuit-Switched (CS) services, or on the Packet Common Control Channel (PCCCH) for Packet-Switched (PS) services. Reference is made to "M. Mouly, M.-B. Pautet, The GSM System for Mobile Communications, Telecom Publishing, 1992, ISBN: 0945592159, http://dl.acm.org/citation.cfm?id=573838".

To avoid network wide paging, a so-called Location Area Code (LAC) is defined to group several cells, in which the user's terminal will be paged. A LAC consists of 1 to n cells and typically the cells of one Base Station Controller (BSC) or Radio Network Controller (RNC) define one LAC. LAC areas can also be larger, e.g. up to a Mobile Switching Center Server (MSS) area, or smaller, e.g. by configuring two or more LACs for one BSC/RNC area.

For PS data services, so-called Routing Areas are defined, which is typically a subset of a Location Area. These routing areas are used by terminals that are General Packet Radio Service (GPRS) attached [https://en.wikipedia.org/wiki/Mobility_management]. In LTE so-called Tracking Areas are defined, each of them consisting of a set of LTE cells. The term Tracking Area Code (TAC) is used in LTE to group one or several cells to a so-called tracking area, in which the terminal will be paged. For simplicity the term LAC is used in this description representing both, LAC and TAC.

In UMTS, a logical paging channel is configured on the Secondary Common Control Physical Channel (S-CCPCH). In LTE, the terminal searches for the Paging Radio Network Temporary Identifier (P-RNTI) within the Physical Downlink Control Channel (PDCCH) transmission. Then it proceeds to decode the Paging Channel (PCH), which is mapped on the Physical Downlink Shared Channel (PDSCH).

All these technologies have in common that several cells are grouped to an area, in which the terminal is paged when the network tries to establish a connection to this user. For the sake of simplicity, the following description uses again the GSM system as a reference.

The problem of prior art solutions is the inadequate efficiency of the paging procedure with success rates far below 100%, i.e. a considerable amount of paging attempts remains unsuccessful. This means that the user's terminal is paged but paging is not responded and consequently the connection will not be established. The subscribers notice unsuccessful paging in the following way:

- **A-party:** In a Mobile Originated Call (MOC), the dialling tone starts after successful paging of the B-party. Silence occurs as long as paging was not successful. After this silent period the call is routed to the B party's voice mailbox.

- **B-party:** If paging of a MTC is not successful, the call is routed to the subscriber's voice mailbox and the paging attempt is counted as failed. The called subscriber was not reachable. The same applies for PS data services, for which the subscriber is not notified about reception of an e-mail or a message/command in case that paging was not successful.

The paging success rate is permanently monitored in mobile networks. Even for different combinations of Temporary Mobile Subscriber Identity (TMSI) and International Mobile Subscriber Identity (IMSI) paging and multiple repetitions, the paging success rate is well below 100%.

Prior art paging procedures as described in "M. Mouly, M.-B. Pautet, The GSM System for Mobile Communications, Telecom Publishing, 1992, ISBN: 0945592159, http://dl.acm.org/citation.cfm?id=573838" provide flexibility in terms of defining the mobile station identifiers (TMSI, IMSI), number of repetitions and timers between repetitions. In Multi-Radio Access Technology (Multi-RAT) networks, a so-called pre-paging [see 3GPP TR 23.908, "Technical Specification Group Core Network; Technical Report on Pre-paging", 2001, http://www.3gpp.org] indication is used to avoid routing of calls to the wrong Mobile-services Switching Centre (MSC) server element. This functionality is beneficial for MTCs e.g. in 2nd Generation (2G), 3rd Generation (3G) networks being served by different MSC server network elements and the subscriber's terminal moving between the 2G and 3G Radio Access Network (RAN).

Paging according to state-of-the-art technology used in the 3GPP systems GSM (2G), UMTS (3G), and LTE is described in 3GPP TS 23.108, "Technical Specification Group Core Network (CN); Mobile radio interface layer 3 specification, Core network protocols - Stage 2", 2011, http://www.3gpp.org; 3GPP TS 24.301, "Technical Specification Group Core Network and Terminals; Non-Access-Stratum (NAS) protocol for Evolved Packet System (EPS); Stage 3", 2013, http://www.3gpp.org; 3GPP TS 36.304, "Technical Specification Group Radio Access Network; Evolved Universal Terrestrial Radio Access (E-UTRA); User Equipment (UE) procedures in idle mode", 2013, http://www.3gpp.org; 3GPP TS 36.331, "Technical Specification Group Radio Access Network; Evolved Universal Terrestrial Radio Access (E-UTRA); Radio Resource Control (RRC); Protocol specification", 2013, http://www.3gpp.org; 3GPP TS 44.060, "Technical Specification Group GSM/EDGE Radio Access Network; General Packet Radio Service (GPRS); Mobile Station (MS) - Base Station System (BSS) interface; Radio Link Control / Medium Access Control (RLC/MAC) protocol", 2013, http://www.3gpp.org and "Eberspacher, H.-J. Vogel, C. Bettstetter, GSM Global System for Mobile Communication, Verlag Teubner, Stuttgart, 3. Auflage 2001, ISBN 3-519-26192-8". Drawbacks are the low paging success rates that are insufficient for the introduction of new services and applications.

US 2008/0293437 A1 discloses a method of paging a mobile terminal in a mobile cellular network wherein paging messages are sent to cells belonging to different LAC/TAC in a prefedined temporal order. Similar methods are known from US 2014/0155109 A1, WO 01/45449 A1 and WO 2008/011779 A1.

The aim of the present invention is a change of state-of-the-art paging procedures and the introduction of a sophisticated paging preparation to improve its success rate. The paging message flow between the mobile network and the mobile terminal shall not be changed, thus this invention does not require changes of the existing standardised 3GPP paging procedures. Standardisation of the data exchange between the nodes of the mobile network is beneficial to facilitate interoperability between the involved network entities as well as for the proposed terminal supported

LAC Set Optimisation procedure. This solution also aims at improvements for networks consisting of multiple Public Land Mobile Networks (PLMNs). A worldwide network consolidation process has started, in which two (or more) networks in one country merge and subscribers get access to both networks using national roaming. The main purpose of the present invention is to increase the reachability of subscribers, which is essential for the introduction of new services in the area of IoT and autonomous driving with LTE-Advanced (LTE-A) and the upcoming 5G technology.

The invention is set out in method claim 1, as well as in apparatus claims 17 (mobile cellular network) and 18 (paging platform). Preferred aspects of the method are subject-matter of the dependent claims.

The mobile network may support the 2G, 3G, 4G or any upcoming standard such as 5G. The method is compatible with existing paging methods as suggested by the mentioned standard and can therefore be subsequently implemented in an existing system. The used technical term LAC (Location Area Code) is defined in the standards 2G, 3G. The term Tracking Area Code (TAC) is used in LTE to group one or several cells to a so-called tracking area, in which the terminal will be paged. For simplicity the term LAC is used in this description representing both, LAC and TAC, as well as any other respective terms used in the upcoming standards as 5G.for instance. The method may be performed by a dedicated paging platform which can be integrated into existing mobile cellular networks by a separate entity in communication with existing components of the network or can be directly implemented by hardware/software into an existing component of the system. The method as claimed is an enhancement of the paging procedure standardised in 3GPP. The present invention introduces a complete new concept for a dynamic paging area adaptation in today's merging networks. This functionality improves the paging success rate and thus the reachability of mobile subscribers and provides benefits especially for consolidating mobile networks within one PLMN. The principal aim of this invention is to increase the reachability of mobile subscribers and devices to provide the basis for new mobile applications like autonomous driving or IoT in LTE-A and the upcoming 5G technology.

Each LAC set includes one or more LAC areas. A LAC area can be understood as a certain geographical area which is defined by a group of cells. The essential feature of the present invention is the dynamical adaption of the LAC in which paging messages are transmitted. In case of an unsuccessful paging attempt the LAC area and the cells are modified to improve the success rate of the next paging attempt. The modification is done by switching to the next LAC set. In detail, the first paging attempt starts with the first LAC set of the plurality of defined LAC sets. If said attempt is not successful, the second LAC set is selected and paging messages will be sent in the cells included in the second LAC set. If the second attempt is also not successful, the third LAC set will be selected for transmission of the paging messages. The procedure is repeated until either all available LAC sets have been selected or a paging attempt was successful.

Paging messages are usually transmitted over a dedicated control channel also called paging channel. One or more paging channels can be used.

According to a preferred aspect of the invention at least one subsequent LAC set includes all LAC areas of the previous LAC set plus at least one additional LAC area. Thereby, a dynamic extension of the LAC area for paging is realized. According to a preferred aspect of the invention at least one subsequent LAC set corresponds to the previous LAC set wherein at least one LAC area has been replaced by another LAC area.

According to the invention the paging messages in the cells for the current LAC set are retransmitted for a predefined number n of times wherein the number n can be set for each LAC set individually. The higher the number of retransmission is the better is the success rate of the paging procedure. However, the retransmission number should be limited with regard to the available resources of the paging channels.

A compromise shall be achieved to optimise the paging efficiency according to the capacity of the at least one paging channel. Therefore, a period between the retransmissions of paging messages for at least one LAC set is automatically set dependent on the actual load on the used paging channel and/or with regard to the maximum capacity of the used paging channel and/or dependent on the priority of the mobile terminal and/or service, wherein the period is preferably decreased in case of a lower load and/or a higher priority and increased in case of a higher load and/or lower priority.

It is particular preferred when a minimum and/or maximum period value for an allowable period range is set, wherein the minimum period value is set to an appropriate value to overcome typical short term coverage holes, such as temporary fading notches or slow fading effects. The maximum period value may be set dependent on the service and/or according to available statistics regarding the success rate of former paging attempts at the expected location of the mobile terminal. For instance the maximum period value shall be set depending on the application. For background services according to the Quality of Service (QoS) attribute Traffic Class for 2G and 3G a longer period is tolerated than for interactive, streaming or conversational services. For LTE the service specific differentiation is done according to the QoS Class Identifier (QCI). In addition, a separation according to the user priority shall be done, preferentially via the user specific QoS attribute Allocation/Retention Priority (ARP).

In case of a high load on the paging channels or overload situation paging procedures of different terminals will be delayed. It may be helpful to define an appropriate scheduling strategy for the retransmission of paging messages as soon as further channel resources are available. According to a preferred aspect, a delayed retransmission of a paging message can be awarded with credit points for each mobile terminal individually wherein the amount of awarded credit points increases in conjunction with a larger delay of the retransmission period. By way of the credit point terminals can be prioritized for retransmission of paging messages. For instance, the terminal with the highest amount of credit points is privileged for retransmission.

According to a preferred aspect of the invention in case the load on the paging channel exceeds a certain threshold retransmission of paging messages is performed for mobile terminals of high priority with a period between the minimum and maximum period value wherein the retransmission of low priority mobile terminals may exceed the maximum period value.

According to a preferred aspect of the invention a reconfiguration of paging channels is triggered in case the current load on at least one paging channel exceeds a predefined threshold wherein the reconfiguration includes reconfiguration of traffic channels to common control channels used as paging channels. Thereby, the available paging channel capacity can be temporary or permanently increased. To avoid a frequent triggering of the reconfiguration procedure a hysteresis can be introduced. It is also possible to set a maximum value for the allowable number of reconfiguration processes including a reconfiguration of traffic channels to common control channels and a further maximum limit for the allowable number of reconfigurations of common control channels to traffic channels.

According to a preferred aspect of the invention a Random LAC procedure is introduced. Such procedure may be conducted in case all previous paging attempts remained unsuccessful. During the Random LAC procedure the subsequent LAC set for transmission of paging messages is randomly selected from the defined plurality of LAC sets.

An essential feature of the present invention is the logging of information regarding paging attempts carried out in the past. Thereby, statistical information may be derived which could be used for future paging procedures, in particular for the definition of the plurality of LAC sets to be used for the paging procedure of a certain mobile terminal. The aggregation of statistical information may be realised by the introduction of a counter indicating the number of paging attempts performed for the respective LAC set on a subscriber basis until paging was successful. After each paging attempt of a certain LAC set the respective counter is incremented. After a successful paging attempt, the counter status will be stored for subsequent processing and the counter is reset. Additionally, a filtering operation can be applied to the counted number of paging attempt per LAC set.

As already indicated before according to a preferred aspect of the invention a LAC set Optimisation procedure can be conducted. Such procedure can optimize the temporal order of the defined plurality of LAC sets in order to improve paging performance. The temporal order of the LAC sets may be adapted with regard to the environment of the mobile terminal and/or with regard to a stored motion profile of the mobile terminal and/or to stored statistical information regarding the LAC sets or mobile terminal, for instance the counted number of paging attempts for the defined LAC sets. For instance, the temporal order of a first and second LAC set is switched in case the counter value of the first LAC set exceeds an upper threshold and the counter value of the second LAC set is lower than a lower threshold.

Furthermore a paging success history and/or a history of successful cell changes and/or trace data of test mobiles and/or data from Self-Optimising Network systems could be evaluated and considered during said LAC set Optimisation procedure.

European Patent (EP) 2 773 149 B1 presents a method for optimising mobility management in cellular networks.

The basic principle is a database for successful and unsuccessful cell changes and the generation of the target cell list based on the history of successful cell changes. These data could also be used as input to the LAC Set Optimisation procedure for including or excluding specific cells to or from the LAC area. The history of successful cell changes shall be used to optimise the sequence of the LAC sets used for paging in the LAC Set Optimisation procedure. Preferably, trace data of test mobiles can be also considered for an optimisation of the LAC set sequence. Additionally, a Self-Optimising Network system (SON) can provide Neighbour-hood relationships. Updated neighbourhood relationships shall be transferred from the SON system via the mobile network and the Input/Output unit to the inventive platform.

According to a preferred aspect, he sequence of switching from a first LAC set to a second LAC set may be defined by a ramp-up pattern based on the results of the LAC set Optimisation procedure. For instance, paging shall start e.g. with one LAC and in case that this initial attempt is unsuccessful, a second LAC shall be added to the first LAC. This can be realised by switching from a first (default) LAC set (including the first LAC) to a second LAC set wherein the second LAC set preferable includes the first and second LAC.

According to a further preferred aspect of the invention the configuration of one or multiple cells in one or multiple network technologies to a LAC area and the configuration of one or several LAC areas to a LAC set is updated periodically based on the geographical distances of base stations from a defined master position. Thereby, an automatic generation of LAC set updates for multiple network technologies based on the geographical distances of base stations from a master posistion is enabled.

It may be possible that the terminal analyses a measurement report and identifies a suited target cell for mobility. Afterwards, the terminal subsequently informs the network about the cell identity of the suited target cell and LAC in which it will shortly be reachable, wherein the network uses said information received from the terminal for the LAC set Optimisation procedure.

According to a preferred aspect of the invention at least one of the plurality of LAC sets includes cells of a second mobile cellular network thereby enabling cross network paging procedure. In case that a LAC set refers to a second mobile cellular network a paging request is sent from the first mobile cellular network to the second mobile cellular network, in particular to the responsible node for the transmission of paging messages. The appropriate node may be selected by way of a matching table stored at the mobile cellular network. Such table links individual LAC areas of the first mobile cellular network with cells/nodes of the second network. It is also conceivable that LAC sets include cells supporting varying RATs. The second mobile cellular network can be either a further national network or a foreign mobile cellular network operated in a different country.

The present invention is also directed to a mobile cellular network adapted for carrying out the method according to any of the preceding claims. Consequently, the advantages as explained above also apply to the inventive system.

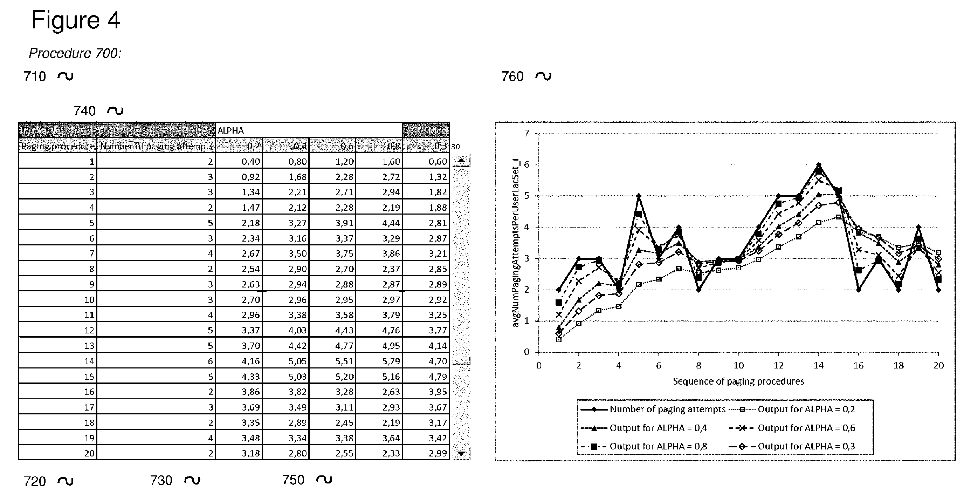

Lastly, the invention is directed to a dedicated paging platform either housed in a dedicated physical entity or integrated into an existing network component. The platform includes at least one Input/Output (I/O)interface, at least one processing unit and at least one database, wherein the platform is adapted to receiving information from the network via the I/O-Interface. The received information may be processed in order to derive an appropriate paging strategy for each mobile terminal. The outcome is paging setting which can be transmitted back to the network via the I/O-Interface in order to perform the method according to the invention. In particular the paging settings are transmitted to at least one base station controller. Further advantages and properties of the present invention are described on the basis of several embodiments as disclosed by the drawings. The embodiments corresponding to the following figures 4-6 are not according to the invention and are present for illustration purposes only. The figures show:

Figure 1:  an overview of the Intelligent Paging platform and modules;

Figure 2:  a block diagram of the procedure for Dynamic Paging, Random LAC and LAC Set Optimisation

Figure 3:  an overview of the procedure for determination of the retransmission period;

Figure 4:  measurement results of the Pre-processing for the reordering of the LAC sequence

Figure 5:  the reordering process of the LAC set sequence

Figure 6:  a block diagram for the method of Paging in National Roaming Networks

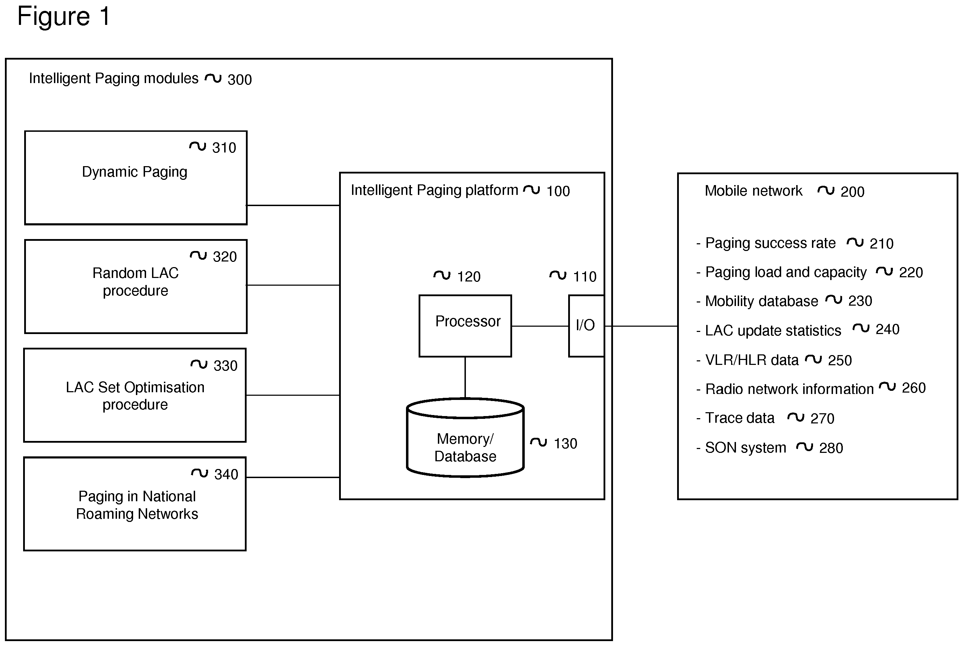

The present invention is an enhancement of the paging procedure standardised in 3GPP. The invention proposes new procedures combined with hardware on which these procedures are executed. Figure 1 demonstrates the Intelligent Paging platform (100), consisting of an I/O unit (110) for the import and export of data, a processor (120) for the processing of data and a memory and database (130) for storing data.

The Intelligent Paging platform can be housed in a dedicated entity or it can be part of the components of the mobile network. In the latter case, it shall preferentially be implemented into the entities that are in charge of paging, e.g. the MSC. In this case, the processor (120) shall use a part of the processing capacity of the MSC's processors, the memory and database (130) shall use a part of the MSC memory and database capacity and the Input/Output unit (110) shall be realised as an internal interface.

The Input/Output unit (110) is the logical interface to the mobile network (200). Input to the Intelligent Paging platform are the paging success rate (210), load and capacity of the paging channels (220), data from the mobility database (230), LAC update statistics (240), Visitor Location Register (VLR) / Home Location Register (HLR) data (250), radio network information (260), trace data (270), and Self-Optimising Network (SON) data (280). These data or parts of it shall be processed individually or in combination in the logical processor (120), stored in the logical memory and database (130) and sent back to the mobile network (200) via the logical Input/Output unit (110).

The left part of Figure 1 represents the Intelligent Paging modules (300) that represent functionalities and procedures running on the Intelligent Paging platform (100). A logical division into four modules is done in the present innovation:

- Module 1: **Dynamic Paging procedure** (310) including paging in multiple LACs, load dependent paging repetitions, and a load dependent reconfiguration of paging channels.
- Module 2: **Random LAC procedure** (320).
- Module 3: **LAC Set Optimisation procedure** (330).
- Module 4: **Paging in National Roaming Networks** (340).

These modules describe the procedure for processing data received from the mobile network (200) via the Input/Output unit (110), processed in the processor (120), stored in the memory and/or database (130) and returned after processing via the Input/Output unit (110) to the mobile network (200). The modules 310 to 340 are part of the Intelligent Paging platform (100), which is the core component of the present invention.

The procedures executed in these modules are an enhancement of the paging procedure standardised in 3GPP. The present invention introduces a complete new concept for a dynamic paging area adaptation in today's merging networks. This functionality improves the paging success rate and thus the reachability of mobile subscribers and provides benefits especially for consolidating mobile networks within one PLMN. The principal aim of this invention is to increase the reachability of mobile subscribers and devices to provide the basis for new mobile applications like autonomous driving or IoT in LTE-A and the upcoming 5G technology.

### Module 1: Dynamic Paging

### Paging in multiple LACs

In state-of-the-art paging procedures, the subscriber is paged in one LAC area. It is typically the LAC in which the subscriber was registered the last time, i.e. after its last location update. If paging of the subscriber in this LAC was not successful, the subscriber can be paged in a selected number of LACs or network wide.

It is the scope of this invention to introduce a dynamic LAC extension and replacement procedure depending on the paging success. Due to its time-critical aspect, this new procedure is characterised by full flexibility in terms of extending or replacing LACs.

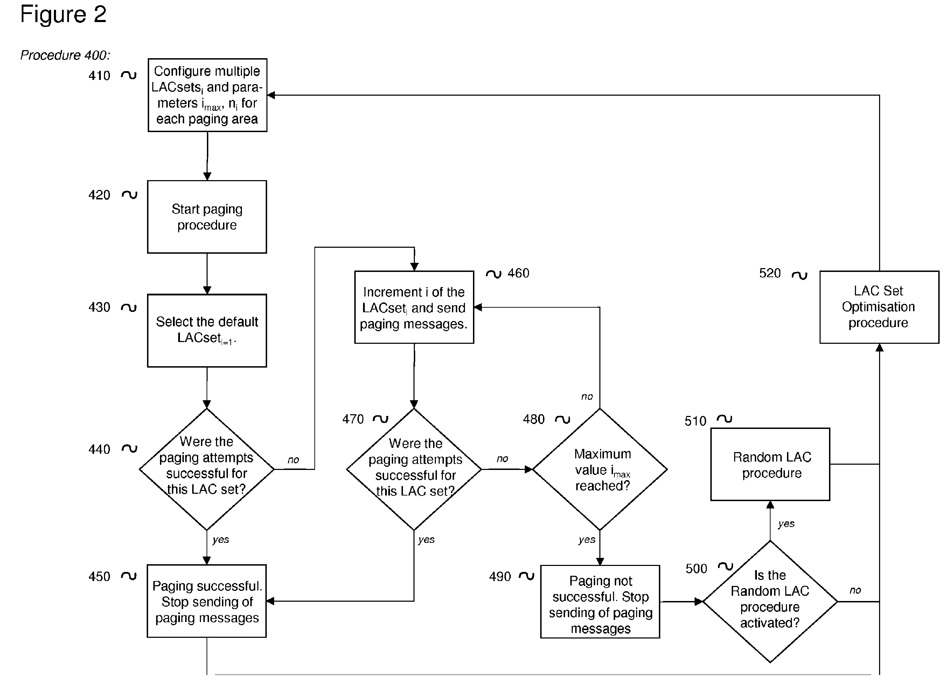

The procedure 400 is shown in Figure 2. In step 410 multiple LAC sets are preconfigured, each of them including one or several LAC areas. Each LAC area consists of cells that belong to this paging area. One example is LACset1 consisting of one LAC area, termed LAC area 1. In this example, cells belonging to LAC area 1 cover cells of an airport located outside a city. As many air passengers arriving at the airport switch on or reactivate their mobile phones from the flight mode, a location update procedure is executed and the network gets information about the current cell of the subscriber. The mobile network has knowledge about the LAC area from mapping of the cell identity to LAC area. As passengers often use local trains to drive from the airport to the city centre, a second LAC area 2 is added in this example in LACset2 that consists of the LAC areas 1 and 2. Other mobile subscribers drive by car towards the city. The motorway is covered by the LAC areas 3 and 4. To increase the probability of reaching the subscriber for a mobile terminated service, LACset3 in this example shall consist of the LAC areas 1, 2, 3, and 4. Other subscribers go to the outskirts of the city, therefore preferentially a further LACset4 is configured, in which the LAC areas 1 and 2 are replaced by the LAC areas 5 and 6, thus LACset4 consists of the LAC areas 3, 4, 5, and 6.

In the present invention also a maximum number of LAC sets, $i_{max}$, is defined and shown in step 410. In this example $i_{max}$ is set to the value four. A further variable $n_i$ is defined that represents the maximum number n of paging attempts for the LAC set i. In one embodiment of this invention, the variable n also implies the mobile station identifier, i.e. whether paging is done on TMSI or IMSI. If the paging sequence is defined such that paging is done first on the TMSI and then on the IMSI, the definition of $n_i = 2$ specifies that the maximum number of paging attempts on LAC set i is two and the first paging attempt shall be done on TMSI and the second (if necessary) on IMSI. For an odd value of n, up to (n+1)/2 paging attempts shall be done on TMSI and up to (n-1)/2 paging attempts shall be done on IMSI. For n = 3, the maximum number of paging attempts on TMSI shall be (3+1)/2 = 2 and the maximum number of paging attempts on IMSI shall be (3-1)/2 = 1.

Updates of the LAC sets and the variable $i_{max}$ and $n_i$ shall be done in alignment with updates of the cells configured in one LAC area.

Step 420 defines the start of the paging procedure. The default LAC set i = 1 is selected in step 430 and the paging messages are sent in the cells defined for the LAC areas belonging to this LAC set (according to step 410). If the paging attempts were successful (step 440), i.e. the mobile terminal responded to the paging messages, the paged subscriber has successfully been located in LACset1 and sending of further paging messages is not necessary (step 450).

In contrast, if the paging attempts were not successful (step 440), the variable i of $LACset_i$ shall be incremented and paging messages shall be sent in the cells consisting of LAC areas 1 and 2, corresponding to the definition of LACset2 in this example (step 460). In the above-described scenario, this use case aims at mobile subscribers having already left the airport area and moving towards the city. If paging in this LAC set was successful (step 470), sending of paging messages shall be stopped (step 450). If paging in this LAC set was not successful (step 470), a query shall be executed to check whether the maximum number of LAC sets is already reached. If $i_{max}$ is not yet reached, the variable i shall be incremented in step 460 and paging messages shall be sent in the corresponding LAC areas. In this example LACset3 consists of the LAC areas 1, 2, 3, and 4, representing cells that cover the airport, the city, and motorway cells between the airport and the city. In step 470 it shall be checked again, whether paging was successful, i.e. whether the paged mobile terminal responded on the paging messages. If the result of the query in step 470 is "yes", the paging attempt was successful and no further paging messages shall be sent (step 450). If the result of the query in step 470 is "no", it shall again be checked in step 480 whether the maximum number of defined LAC sets is already reached. In this example i is still lower than $i_{max}$ and therefore i shall be incremented from 3 to 4 in step 460. In the LACset4, the LAC areas 1 and 2 have been replaced by 5 and 6 and paging shall be executed in the defined cells (step 460). If paging was still unsuccessful in this fourth LAC set (step 470), $i_{max}$ is already reached (step 480) and paging for this subscriber shall be stopped unsuccessful (step 490).

In one embodiment of the present invention, a timer shall be used to limit the time until paging is started in the next following LAC set. If paging was not successful in $LACset_i$ and the timer expires, paging shall start in $LACset_{i+1}$. This allows overlapping paging intervals in which paging messages are sent in both areas, $LACset_i$ and $LACset_{i+1}$ .

**Load dependent paging repetitions**

A threshold-based procedure shall be applied to increase the flexibility of sending paging messages. This allows improving the trade-off between network efficiency and the target of improving the reachability of the subscriber. The latter aspect is crucial for upcoming technologies like autonomous driving, in which any delay in being connected to a specific terminal can cause significant problems.

A compromise shall be achieved to optimise the paging efficiency according to the capacity of the paging channel. For the repetition of paging messages in prior-art solutions, the number of repetitions is defined and the period between repetitions.

According to this invention, instead of defining the repetition period, a minimum $t_{min}$ and a maximum time interval $t_{max}$ for two consecutive paging attempts shall be specified. Within this period, the paging attempt shall be triggered according to the load on the paging channel.

- After each paging attempt the timer $t_{min}$ shall be started. If the previous paging attempt n was not successful, the next paging attempt n+1 shall not be started before expiry of this timer. This timer shall be set to a low value to overcome typical short term coverage holes, e.g. temporary fading notches or slow fading effects like driving through a short tunnel or temporary shadowing occurred by lorries.

- After each paging attempt a further timer $t_{max}$ shall be started. The next paging attempt shall be started after expiry of $t_{min}$ but before expiry of $t_{max}$. This parameter shall be set depending on the application. For background services according to the QoS attribute Traffic Class for 2G and 3G [3GPP TS 23.107, "Quality of Service (QoS) concept and architecture", 2012, http://www.3gpp.org] a longer period is tolerated than for interactive, streaming or conversational services. For LTE the service specific differentiation is done according to the QCI. In addition, a separation according to the user priority shall be done, preferentially via the user specific QoS attribute ARP [3GPP TS 23.107, "Quality of Service (QoS) concept and architecture", 2012, http://www.3gpp.org].

- The instantaneous traffic load on the paging channels is known in the mobile network 200 in Figure 1 and shall be reported to the Intelligent Paging platform 100 via the Input/Output unit 110. Additional the maximum capacity of the currently configured paging channels shall be reported to the Intelligent Paging platform. The instantaneous traffic load on the paging channels can thus be calculated by the Intelligent Paging platform.

- Depending on the current traffic load on the paging channels, repetitions of paging attempts shall be triggered earlier or later within the interval $[t_{min}; t_{max}]$.

    ◦ If the load on the paging channel is below the threshold pagingLoadThr1, sufficient capacity is available to transmit all waiting paging messages on the air interface. Repetitions shall be sent after expiry of $t_{min}$.

    ◦ If the load on the paging channel exceeds the threshold pagingLoadThr1 the first paging messages shall be sent immediately. Paging repetitions of high priority services shall be sent after expiry of $t_{min}$, whereas paging repetitions for lower priority services shall be delayed in case of resource bottlenecks on the paging channels. This means repetitions of paging messages for low priority services shall be sent when $t_{min}$ expired and whenever capacity on the paging channels is available. However, if capacity on these channels is required to send paging repetitions for high priority services, the latter messages shall obtain higher priority. Each delayed sending of paging messages shall be valued with credit points. The longer the delay within the period $[t_{min}; t_{max}]$, the higher the credit points for sending paging repetitions to this terminal. As soon as resources are available on the paging channels, paging repetitions shall be sent to the terminal with the highest credit points. After expiry of $t_{max}$, the credit points for this terminal shall be set to a high value, e.g. infinite. This implies an immediate sending of the paging repetition even if paging repetitions for services of higher priority have to be delayed due to lack of resources on the paging channels.

- After sending the paging repetition, a reset of both timers, $t_{min}$ and $t_{max}$ and a reset of the credit point counter shall be done and in case of unsuccessful paging, the next repetition of the paging message shall be sent between $t_{min}$ and $t_{max}$, depending on the load on the paging channels and relative priority of the service.

- The term "service priority" represents a joint combination of user and service specific QoS criteria [3GPP TS 23.107, "Quality of Service (QoS) concept and architecture", 2012, http://www.3gpp.org]. In a preferred embodiment of this invention, cost functions shall be used to define the repetition time for each waiting paging attempt according to its priority.

- A second load threshold pagingLoadThr2 shall be introduced with (pagingLoadThr2 > pagingLoadThr1). If the load on the paging channel exceeds this threshold, the interval $[t_{min}; t_{max}]$ shall define the paging repetition period for high priority services, whereas the repetition interval for low priority services may exceed $t_{max}$ for the benefit of keeping the repetition period of high priority services below $t_{max}$.

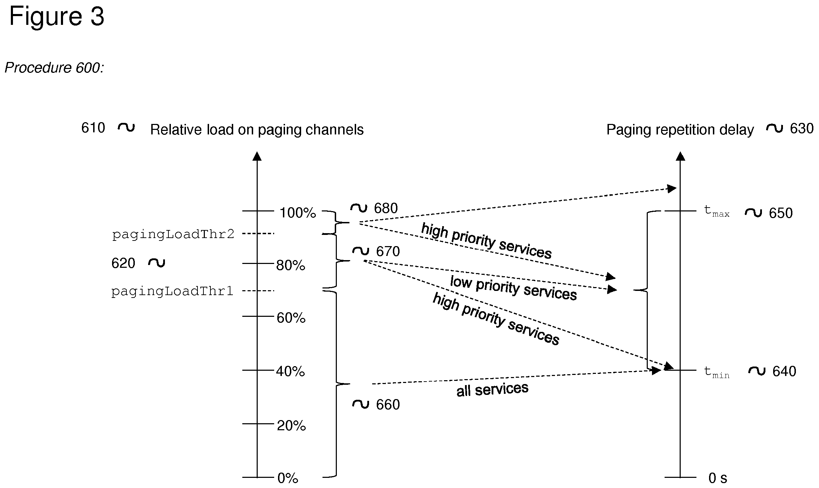

An example for this procedure 600 is demonstrated in Figure 3. The left scale 610 represents the relative load on the paging channels, i.e. the ratio of the currently occupied physical resources on these channels and the maximum available resources on these channels. On this scale 610, the two load dependent thresholds pagingLoadThr1 and pagingLoadThr2 620 are set to 70% and 90%, respectively. The time scale 630 on the right side of Figure 3 represents the delay of the paging repetitions. While the first paging attempt shall be sent immediately, repetitions are necessary in case of the first paging attempt being unacknowledged, i.e. the mobile terminal did not reply on it by sending a paging response to the network. Unsuccessful paging can be caused by short coverage holes, e.g. a subscriber entering a tunnel that is not covered by the radio network. Typical periods until the first repetition is sent are in the range of some seconds. The timer $t_{min}$ 640 shall be used to define this period. In the present invention, a second timer $t_{max}$ 650 is introduced that defines the upper threshold of the interval $[t_{min}; t_{max}]$.

Three load ranges are shown on scale 610. Due to filtering of the fast varying load on the paging channels, the instantaneous load used for comparison with the thresholds pagingLoadThr1 and pagingLoadThr2 includes some inertia. In this example the interval [0%; pagingLoadThr1[ 660 represents the range of no paging capacity bottlenecks, wherein the upper interval limit should be excluded from said range as indicated by the open bracket. Regardless of the current paging load in this interval, the repetitions for all services shall be scheduled at expiry of $t_{min}$. First protective measures shall be done if the filtered paging load is in the interval [pagingLoadThr1; pagingLoadThr2[ 670. Repetitions of paging messages for services of high priorities are prioritised and shall be sent at expiry of $t_{min}$. For services of lower priority, repetitions of paging messages shall be sent after expiry of $t_{min}$ as soon as vacant resources on the paging channels are available. The upper range of this period is $t_{max}$ 650.

A third load range 680 is defined by the interval [pagingLoadThr2; 100%]. Repetitions of paging messages shall be executed within the period $[t_{min}; t_{max}]$ for high priority services, whereas for low priority services the delay may exceed $t_{max}$ depending on the traffic load on the paging channels.

**Load dependent reconfiguration of paging channels**

A load threshold pagingChannelReconfigThr shall be introduced to trigger a load-dependent reconfiguration of traffic channels to control channels for adapting the system capacity on the current load of the traffic channels.

In one embodiment of this invention, the filter principle described in equation 1 (see module 3) shall be used to average the reported instantaneous load on the paging channels for smoothening temporary traffic peaks.

If the filtered traffic load on the paging channels exceeds the threshold pagingChannelReconfigThr, a reconfiguration of traffic channels to common control channels used for paging shall be triggered to increase the capacity of paging channels. After channel reconfiguration, the calculation of the instantaneous load on the paging channels has to be adapted to the increased capacity on the paging channels. This implies:

- A reset of the filter for smoothening the traffic load.

- Initialisation of the filter with a value that does not trigger a further channel reconfiguration. In a preferred implementation, the filter shall be initialised with the last filter output recalculated on the new capacity. If for example, the traffic load on the paging channels before reconfiguration was 90% and the capacity has been doubled after channel reconfiguration, the load recalculated for the new capacity is 45% assuming unchanged absolute traffic on the paging channels.

- Using the modified offered capacity on the paging channels for continuous calculation of the instantaneous traffic load.

- A further channel reconfiguration will be triggered, if the filtered instantaneous relative traffic load exceeds again the threshold pagingChannelReconfigThr. In the example above the relative traffic load exceeds the threshold again if the absolute traffic load is doubled (at doubled capacity).

A hysteresis value shall be introduced pagingChannelReconfigHyst to avoid frequent channel reconfiguration procedures. A reconfiguration of paging channels or common control channels, respectively, to traffic channels shall be triggered if the filtered traffic load on the paging channels is lower than pagingChannelReconfigThr - pagingChannelReconfigHyst.

The setting of the parameter pagingChannelReconfigHyst shall be aligned with the setting of pagingChannelReconfigThr to avoid frequent channel reconfigurations. In a preferred implementation, both parameters shall be aligned to the currently offered paging capacity, i.e. different sets of combinations of pagingChannelReconfigThr and pagingChannelReconfigHyst shall be provided.

For limiting the range of channel reconfigurations, an upper and a lower threshold shall be introduced. Both thresholds either refer to the number of executed channel reconfigurations or to the number of channels or bandwidth assigned to these channels. In the first case, the parameter maxNumPagingChannelIncrease specifies the maximum allowed number of channel reconfiguration processes from traffic channels to common control channels starting from the basic configuration. The parameter maxNumPagingChannelDecrease specifies the maximum number of channel reconfigurations from common control channels used for paging to traffic channels, again starting from a reference channel configuration. If both thresholds are set to the value two, starting from the channel configuration before execution of "load dependent reconfiguration of paging channels", up to two reconfiguration processes from traffic channels to common control channels can be done. In case of low traffic load on the paging channels, also two reconfigurations of common control channels to traffic channels can be executed. Again, the basis is the reference channel configuration defined before dynamically adapting the capacity of the paging channels.

If the number of channels or bandwidth assigned to these channels is used, both thresholds shall either refer to an absolute or relative amount of resources of these channels.

**Location dependent paging periods**

Mobile networks use databases to store cell specific or network element specific data. This database shall be extended to include information of the paging success rate. The cell of the subscriber is known if the paging procedure was successful and the subscriber is connected to the network. For each cell, statistics shall be used to store the paging efficiency, i.e. the average number of paging attempts that were necessary to successfully page the subscriber. This paging efficiency value shall be added to the statistics of the cell in which the user was served after successful paging.

When paging a subscriber, the cell specific entries of the cells belonging to a LAC area shall be evaluated and used as input for Dynamic Paging (module 1) and exchange of the LAC set (modules 3 and 4). In Figure 1 the input of the paging success rate 210 of the mobile network 200 is transmitted to the Intelligent Paging platform 100 via the Input/Output unit 110. This input shall be used for the following modules of the present invention:

- Input to the module 1 *"Dynamic Paging 310":* The procedure described in section "Load dependent paging repetitions" and especially the parameters $t_{min}$ and $t_{max}$ shall be adapted to network statistics of the paging success rate for the corresponding LAC area. If for example the paging success rate in cells belonging to a LAC area is low, the paging attempts shall be repeated sooner by reducing the value of the timer $t_{max}$. This procedure is beneficial especially in areas with tunnels.

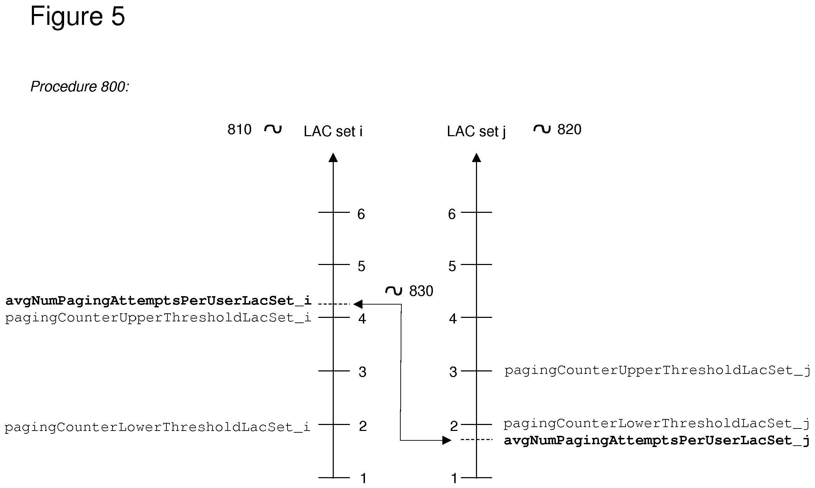

- Input to the modules 3 *"LAC Set Optimisation procedure 330"* and 4 *"Paging in National Roaming Networks 340":* If the paging success rate in cells belonging to a LAC area is low, the exchange of the LAC set shall be done earlier, e.g. after the first unsuccessful paging attempt. This shall be achieved by dynamically adapting the parameter pagingCounterUpperThresholdLacSet_i (Figure 5). A faster exchange of the LAC set is obtained by reducing this parameter to a lower value. The procedure and relevant parameters are described in modules 3 and 4 of the present invention.

**Ramp up of the number of LACs to be paged**

The Dynamic Paging procedure shall optionally include a ramp-up procedure in terms of number of LACs to be paged. In combination with the LAC Set Optimisation procedure (module 3), paging shall start e.g. with one LAC and in case that this initial attempt was unsuccessful, a second LAC shall be added to the first LAC. According to module 3, this shall be realised by switching from a first (default) LAC set to a second LAC set. The ramp-up pattern shall be selected by the parameter paging-RampUpPattern. Pattern A represents for example adding a further LAC (changing from the first to the second LAC set) with every further paging attempt, pattern B represents adding a further LAC (switching from the second to the third LAC set) with every second further paging attempt. Pattern C features doubling the number of LACs with each new paging attempt up to a maximum number $i_{max}$ of LAC sets. The parameter $i_{max}$ and the related procedures are described in modules 3 and 4.

**Dynamic paging area definition**

The scope of this invention is paging in one or multiple network technologies (2G, 3G, LTE, LTE-A, 5G etc.). Full flexibility shall also be provided with respect to one or multiple network operators.

Different patterns shall be defined by the parameter pagingTechnologies. The following examples shall be considered:

- **Pattern A** includes only that technology, in which the subscriber was latest registered.

- **Pattern B** includes the technologies of highest traffic in the considered LAC areas, e.g. 2G and 3G.

- In a further embodiment of this invention, the capability of the subscriber's recently used terminal shall be taken into consideration. This information shall be transferred from the mobile network 200 in Figure 1 via the Input/Output unit 110 to the database 130 of the Intelligent Paging platform 100. Assuming that the preferred traffic steering is done towards the newest technology, 5G and LTE/LTE-A shall be included in the paging pattern, based on the consideration that the terminal is preferentially steered to these network technologies.

The procedure for paging in multiple networks is described in module 4.

- In one embodiment of this invention, look-up tables for neighbourhood relationships based on radio network planning data shall be used to configure the cells belonging to one LAC area in a LAC set.

- In another embodiment, base stations that are located up to a specific distance from the considered cell shall automatically be selected for the LAC area. The information about the distance between base stations is available in the core network as well as in the radio network planning data.

**Module 2: Random LAC procedure**

If paging on the used LAC sets is not successful, a random procedure shall be executed to send paging messages on this LAC. This random process shall select any LAC for which paging was not yet executed for this subscriber. Preferentially LACs covering cells in the vicinity of the last cell the subscriber was registered, shall be selected. This invention proposes a procedure that assigns a higher value to those LACs and a lower value to LACs covering cells far away from the last cell. A random number shall then be generated and it is more likely that a LAC of a higher value is selected.

The proposed Random LAC procedure shall be used separately or in combination with the Dynamic Paging procedure (module 1) and/or LAC Set Optimisation procedure (module 3) and/or Paging in National Roaming Networks procedure (module 4). The combination with the Dynamic Paging and LAC Set Optimisation procedures is shown in Figure 2. If the Random LAC procedure is activated (step 500), the procedure shown in step 510 shall be executed. Random LAC means that a randomly chosen LAC area, that was not yet used for paging the subscriber, is selected and paging is executed in this LAC area. Preferentially one LAC set shall be used for one paging attempt and in the next paging attempt, another randomly chosen LAC set shall be used. For improving the success rate, a preselection of LACs shall be done and only the LAC areas that cover cells of a certain network area shall be selected, out of which the random process selects the LAC.

The Random LAC procedure is considered as a "last chance" to reach the subscriber. Its main intention is to generate statistics and identify LACs that were previously not considered for paging this subscriber. This procedure is therefore considered as an auto-optimising paging process providing input to the LAC Set Optimisation procedure in step 520. The latter procedure is described in detail in module 3.

In all cases, successful (step 450) paging, unsuccessful (step 490) paging and the result of the Random LAC procedure (510), the information about the LAC set for which the paging procedure was finally successful as well as the information that for none of the LAC sets the paging procedure was successful, shall be counted and used for the LAC Set Optimisation (step 520).

## Module 3: LAC Set Optimisation

### Sequence of LAC sets

### Determination of the number of paging attempts for each paging procedure

A threshold-based algorithm shall be introduced to optimise the chronological sequence of LAC sets. For each configured LAC set i, a paging counter pagingCounterLacSet_i shall be used. Its default value is zero. With each paging attempt, the counter shall be incremented. If already the first paging attempt in the first LAC set $LACset_{i=1}$ was successful, the counter has the value 1. With each new paging attempt for the considered paging procedure and LAC set, the counter shall be incremented by one.

- If a second paging attempt was necessary for successfully paging the mobile terminal, the counter has the value two.

- If none of the paging attempts was successful, the number of executed paging attempts for this LAC set shall be reported.

When a new paging procedure starts in this LAC set for a new subscriber, the counter shall be reset to its initial value zero. Further on it shall be incremented by one with each paging attempt for this user. Thus, this counter represents the number of paging attempts on a user level.

### Filtering the number of paging attempts on LAC set level

To avoid frequent changes for the sequence of LAC sets, filtering of the executed paging attempts per user shall be applied on LAC level. The value of the counter pagingCounterLacSet_i for each paging procedure applied to any user in the considered LAC set shall provide the input to equation 1. This means with each paging procedure a further input value shall be written into the filter described in equation 1. The output of equation 1 is the filtered and averaged number of paging attempts in the applied LAC set. In a preferred embodiment of this invention, a running average filter shall be used for smoothening the filter output, e.g. an exponential filter described in equation 1.

$$\text{avgNumPagingAttemptsPerUserLacSet\_i}(n) = (1 - \alpha) * \text{avgNumPagingAttemptsPerUserLacSet\_i}(n-1) + \alpha * \text{pagingCounterLacSet\_i}(n)$$

In equation 1, the variable n indicates a consecutive number of executed paging procedures starting with n = 1. The filter represented in equation 1 is event-triggered and shall be initialised with a value that does not trigger a change of the LAC sequence, e.g. avgNumPagingAttemptsPerUserLacSet_i(n=0)= 0. An event is the result of any paging procedure executed in the considered network entity/area for this LAC set i. The term pagingCounterLacSet_i(n) denotes the input variable at instance n, i.e. the number of paging attempts in LAC set i that were executed to page the currently considered user at instance n. The factor $\alpha$ is a variable in the range [0; 1] and defines the weighting of this input value. The previously calculated output value avgNumPagingAttemptsPerUserLacSet_i(n-1) at instance n-1 is multiplied with the factor $(1-\alpha)$. The sum of both products on the right side of equation 1 defines the filtered output at instance n, denoted avgNumPagingAttemptsPerUserLacSet_i(n). The filter defined in equation 1 is one example. Any other filtering method is possible.

Different network levels shall be considered for filtering the number of paging attempts. A simple implementation is the limitation to a specific network entity, e.g. one MSC area. In this solution, the number of paging attempts of all paging procedures executed for the considered LAC set and network elements controlled by this MSC are used as input to the filtering process described in equation 1. In this case the filtering procedure shall preferentially be implemented into the MSC software.

A more sophisticated solution is to subdivide the filtering process into several smaller network areas, e.g. represented by a BSC/RNC or Base Transceiver Station (BTS)/NodeB/eNodeB area. In a preferred embodiment of this invention, the filtering process as well as the LAC Set Optimisation procedure shall be done on virtual network entities. This means that the procedure is physically executed on the hardware that houses the processor for the LAC Set Optimisation procedure, but input in terms of the number of paging attempts and output in terms of filtered and averaged values is done individually for various small network areas. This allows a LAC set optimisation adapted to the environmental conditions of the geographical area.

Figure 4 shows the pre-processing procedure 700 of the measured number of executed paging attempts, which shall be used as input to the LAC Set Optimisation procedure. Table 710 shows an example of 20 subsequently executed paging procedures (first column, 720) starting with paging procedure #1 and ending at paging procedure #20. The number of paging attempts for each paging procedure is listed in the second column (730). The filter described in equation 1 is initialised with the value 0 (init value, 740). The filter output of equation 1 for $\alpha = 0.2, 0.4, 0.6, 0.8$, and $0.3$ is shown in the following columns (750).

Diagram 760 in Figure 4 shows a graphical representation of the filter output. The abscissa represents the sequence of the 20 paging procedures. The number of paging attempts for each paging procedure is indicated on the ordinate. The solid curve shows the input values, i.e. the unfiltered number of paging attempts for each paging procedure. The same curve is obtained for $\alpha = 1$, i.e. no consideration of the past averaged values in equation 1 but full weight on each incoming new value. The sequence of paging procedures includes two periods, in which the number of paging attempts was higher than four. In the fifth paging procedure five paging attempts were executed. The curve for $\alpha = 0.8$ follows closely the input values. At this instance the filter output for $\alpha = 0.8$ exceeds the value four, whereas filters using a lower value for the variable $\alpha$ (0.6, 0.4, 0.3, or 0.2) smoothen this peak. This value four will become important in the following descriptions, as the threshold for triggering an exchange of the LAC set is set to this value. At the moment it shall only be considered that the definition of the value $\alpha$ allows to immediately trigger an exchange of the LAC set or to smoothen temporary peaks. The latter behaviour is achieved for small values of $\alpha$, which finally provides a higher inertia into the reordering of the LAC sets used for paging.

In contrast to the short peak shown in table 710 and diagram 760 for the 5th paging procedure, a longer-standing high amount of executed paging attempts is shown for the paging procedures #12 to #15. In this interval, five and six paging attempts were necessary (column 730). The filter output avgNumPagingAttemptsPerUserLacSet_i exceeds the threshold with the value four already at paging procedure #12 for $\alpha = 0.8, 0.6$, and $0.4$, while for $\alpha = 0.3$ it exceeds this threshold at paging procedure #13. Higher inertia of the filter output is achieved for $\alpha = 0.2$, for which the selected threshold is exceeded after paging procedure #14. This example shows the pre-processing of measurements before an exchange of the sequence of the LAC set is done in the LAC Set Optimisation procedure.

## Triggering the change of the LAC set sequence

For each LAC set i, a pair of thresholds pagingCounterUpperThresholdLacSet_i and pagingCounterLower-ThresholdLacSet-i shall be introduced and used for reordering of the sequence of LAC sets. If the filtered and averaged number of paging attempts in LAC set i, avgNumPagingAttemptsPerUserLacSet_i is equal or exceeds the threshold pagingCounterUpperThresholdLacSet_i and the counter for the LAC set j, avgNumPagingAttemptsPerUserLacSet_j is lower than pagingCounterLower-ThresholdLacSetJ, the currently used sequence of LAC sets is candidate for a reordering procedure.

This means that reordering of the sequence of these two LAC sets shall be done if the following condition is fulfilled (equation 2):

$$[(avgNumPagingAttemptsPerUserLacSet\_i \geq pagingCounterUpperThresholdLacSet\_i)$$

$$AND$$

$$(avgNumPagingAttemptsPerUserLacSet\_j < pagingCounterLowerThresholdLacSet\_j)]$$

In a further embodiment of this invention, the ratio between the number of paging attempts and the paging counter thresholds shall be used. The condition is described in equation 3:

$$[(avgNumPagingAttemptsPerUserLacSet\_i / pagingCounterUpperThresholdLacSet\_i \geq p)$$

$$AND$$

$$(avgNumPagingAttemptsPerUserLacSet\_j / pagingCounterLowerThresholdLacSet\_j) < q]$$

In this embodiment, either equation 3 as single criterion or equation 2 combined via an OR-conjunction with equation 3 shall be used as trigger for the change of the LAC set sequence. Adding the criterion described in equation 3 avoids that the exchange of the sequence of LAC sets is not triggered if the number of paging attempts for both LAC sets i and j is high (e.g. avgNumPagingAttemptsPerUserLacSet_i = 8 and avgNumPagingAttemptsPerUserLacSet_j = 4.2) but avgNumPagingAttemptsPerUserLacSet_j is higher than the absolute threshold pagingCounterLowerThreshold LacSet_j.

To avoid unwanted reordering of the LAC set sequence during the starting phase, a further variable $n_{min}$ shall be introduced that shall be set to e.g. 1000. Execution of the LAC set reordering procedure shall only be done if n in equation 1 for each of the involved LAC sets, i and j, exceeds $n_{min}$. This is necessary, because the filter in equation 1 is initialised with the value avgNumPagingAttemptsPerUserLacSet_i(n=0)= 0. The same initialisation is done for the filter of LAC set j, avgNumPagingAttemptsPerUserLacSet_j(n=0)= 0. As long as no paging procedure has been executed in LAC set j, the second part of the AND-conjunction in equation 2 is always fulfilled if the threshold pagingCounterLowerThresholdLacSet_j is set to a value higher than zero. Introducing a minimum requirement in terms of the number of executed paging procedures by $n_{min}$ improves the reliability of the candidate for a LAC sequence reordering procedure.

Figure 5 demonstrates the condition described in equation 2. In procedure 800, a scale for the average number of paging attempts for LAC set i (810) is shown with the two thresholds for this LAC set, pagingCounterLowerThresholdLacSet_i and pagingCounterUpperThresholdLacSet_i. The actual filtered and averaged value for the number of paging attempts in this LAC set is represented by avgNumPagingAttemptsPerUserLacSet_i. The corresponding thresholds and average value for LAC set j are represented in 820. A condition for which equation 2 is fulfilled is shown in 830.

In equation 2, i is smaller than j, i.e. paging is first executed in the LAC set i and then in the LAC set j. This equation implies that the previously used sequence of LAC sets for paging is candidate for reordering, if the paging success rate on the first LAC set is low (expressed by a high value of avgNumPagingAttemptsPerUserLacSet_i) but high in the second LAC set (expressed by a high value of avgNumPagingAttemptsPerUserLacSet_j). Two different thresholds are used for each LAC set to avoid frequent changes if the success rate in both sets is equal. The latter case refers to the situation that only one threshold was used.

Example: Paging on the first LAC set has a low success rate and the filter output avgNumPagingAttemptsPerUserLacSet_1 reports the value 4. In LAC set 2 the success rate is higher and the counter avgNumPagingAttemptsPerUserLacSet_2 reports the value 1. The LAC Set Optimisation procedure in step 520 of Figure 2 compares the filtered and averaged counter values with the defined thresholds. In this example, the threshold pagingCounterUpperThresholdLacSet_1 is set to 4 and the threshold pagingCounterLowerThresholdLacSet_2 is set to 2. Equation 2 is fulfilled for this example [(4 $\geq$ 4) AND (1 < 2)] and the currently used sequence of the LAC set shall be changed. This means that the previous sequence to start paging on LAC set 1 and then to switch to LAC set 2 shall be modified and the paging shall further on start on LAC set 2 and - if not successful - paging shall then be done on LAC set 1. This sequence shall be kept as long as equation 2 is fulfilled.

Now, the pre-processing for the reordering of the LAC set sequence in Figure 4 and the threshold based reordering process shown in Figure 5 shall be considered. In the example described above, the threshold pagingCounterUpperThresholdLacSet_i is set to the value four, i.e. the change of the LAC set is triggered if according to equation 2, the filter output of the currently used next LAC set avgNumPagingAttemptsPerUserLacSet_j is lower than the defined threshold pagingCounterLowerThresholdLacSet_j. If this condition is fulfilled, the LAC sets i and j change their order according to this invention, i.e. for the next paging procedures, the previously used LAC set j will be selected for paging before paging will be done in the previously used LAC set i. The filters for averaging the number of paging attempts avgNumPagingAttemptsPerUserLacSet_i and avgNumPagingAttemptsPerUserLacSet_j shall then be reset. The contents of LAC set i shall be replaced by that of LAC set j and vice versa, i.e. the cells defined for LAC set i shall be replaced by those defined for LAC set j but the sequence of indexes i < j shall be kept.

The example above describes a change of the sequence between LAC set 1 and LAC set 2. This invention is not limited to two LAC sets and the reordering procedure shall be applied to the total number of LAC sets defined by the parameter $i_{max}$. The result of the LAC set optimisation procedure described in step 520 of Figure 2 is a ranked list of LAC sets. In an updated configuration of the LAC sets (step 410 in Figure 2), the start of the paging procedure described in step 420 and the selection of the first LAC set for sending paging messages will then use the LAC set with the highest success rate.

An exchange of LAC sets shall preferentially be done in terms of days rather than using this procedure for a short-time optimisation in terms of hours. The behaviour for the long-term optimisation can be achieved by setting $\alpha$ to a value considerably lower than 0.2, i.e. the LAC set will be exchanged only in case that the number of paging attempts almost constantly exceeds the defined upper threshold.

**Speed dependent sequence of LAC sets**

The above-described procedure for reordering the sequence of the LAC sets shall be enhanced to differentiate between various topological environments and speed settings in mobile networks. Databases for radio network planning in today's networks use attributes to flag specific cells. One attribute can be the speed environment, i.e. cells covering railway lines or motorways are flagged as high-speed environment, whereas cells covering pedestrian zones are flagged as low-speed environment. Cells of both types can be included in the same LAC set. In a preferred embodiment of this invention, a change of the sequence of the LAC set shall be defined separately for different speed environments. This means e.g. that for low speed users, the sequence LAC set 1 → LAC set 2 → LAC set 3 is used, whereas for high speed users the sequence LAC set 1 → LAC set 3 → LAC set 2 is selected. The result is a speed sensitive paging procedure with LAC sets adapted to the user's motion profile.

In this embodiment, also the averaging procedure for the number of paging attempts described in equation 1 shall be separated for the defined environments. In a preferred implementation, a separate filter (equation 1) is used for each defined environment. Separating of the input is possible for mobile terminals that responded on any of the paging attempts. After successful paging, the setup procedure is executed and the cell in which the user is allocated, is known. If this cell is flagged as high-speed cell, the number of paging attempts shall be used as input pagingCounterLacSet_i(n) to the filter defined for this high-speed environment (equation 1). In this embodiment, the procedure for changing the sequence of the LAC sets, shown in Figure 5, shall be done individually for each defined environment. This becomes possible by using in equation 2 the filter output avgNumPagingAttemptsPerUserLacSet_i and avgNumPagingAttemptsPerUserLacSet_j for the corresponding environment. Thus the sequence of the LAC sets in a specific area can be changed e.g. for the high-speed scenario, while it is kept for the low-speed scenario. This speed-sensitive separation of the LAC set reordering procedure can be essential for assisted and autonomous driving.

Selection of the correct LAC set sequence at the beginning of the paging procedure: According to the current state of technology, the cell-specific environment is not known during the initial paging procedure. However, the motion profile of a mobile terminal can be monitored and this information shall temporarily be written into the database 130 in Figure 1. For active connections the motion profile can be derived from the Timing Advance information or retention time in specific cells. Alternative solutions are the analysis of geographical position coordinates over the time or specific sequences of cells in which the terminal is served that are flagged for example as cells covering a railway line. For executing a new paging procedure (procedure 400 in Figure 2), the last entry of the terminal's current environment shall be used to define the sequence of the LAC sets. To keep the consistency of data high, this input shall only be used if a timer, started after the last update, did not yet expire. A first user being expected for a high-speed environment shall e.g. be paged on LAC set 1 first and then on LAC set 3, whereas a second user being expected in a low-speed environment shall be paged first on LAC set 1 and then on LAC set 2. In mobile networks, LAC set 2 covers for example cells of an underground line, to which the user is expected to walk if paging on the outdoor cells of LAC set 1 was not successful. LAC set 3 covers for example the adjacent cells for the railway line.

**Immediate change of the LAC sequence**

In a further embodiment of this invention, a fast change of the LAC set shall be executed. If none of the paging procedures for one LAC set was successful, this LAC set shall immediately be moved to the last position of the sequence list.

If none of the paging procedures for any of the LAC sets of the executed paging procedure was successful, a cyclic exchange of the previously defined LACs with new LACs shall be done. This allows a fast reaction on the most critical situations, in which the subscriber cannot be paged and thus is not reachable by the mobile network.

**Module 4: Paging in National Roaming Networks**

When mobile networks are consolidated, national roaming can be used to improve coverage and capacity in the merged networks. The mobile subscribers get access to more than one mobile network in their home country. In national roaming 3GPP networks, situations can occur at the MSC borders, in which a subscriber was already logged out from the first network (VLR entry) but is not yet registered in the VLR of the second network. During this period, the subscriber is not reachable and incoming calls are directed to the voice mailbox. Data services sent to this subscriber are not received immediately due to impossible paging in this period. This invention provides a solution for the period when a moving subscriber leaves the cell of the first network until execution of the location update procedure in the new cell of the second network. In state-of-the-art networks, this period takes typically around five seconds.

In national roaming networks, barring of cells might be necessary for traffic control reasons. It means that the mobile station's attempts to change the cell are rejected by the MSC. Also in this situation, the subscriber has already logged off from the VLR of the first network but is not yet registered in the VLR of the second network. In barring situations, the period of invalid VLR registration is even longer than the above-described five seconds. In both cases MTC are routed to the voice mailbox since paging of the subscriber is not successful.

The following inventive step provides a solution for the transient phase until the subscriber has successfully done the location update in the new area.

**New configuration**

It is the scope of this invention to execute paging in both networks, if the first paging attempt in one network fails. The proposed solution is an enhancement of the previous modules. For the differentiation between several networks, a second index shall be added to the LAC set. The term $LACset_{ij}$ denotes LAC set i of the mobile network j.

The following example describes a paging sequence for national roaming between two networks j = 1 and j = 2. Yet this invention is not limited to two mobile networks.

- **First paging:** LAC set 1 of the first network: $LACset_{11}$.

- **Second paging:** LAC set 1 of the first network and LAC set 1 of the second network: $LACset_{11} + LACset_{12}$.

- **Third paging:** LAC set 2 of the first network and LAC sets 2 and 3 of the second network: $LACset_{21} + LACset_{22} + LACset_{32}$.

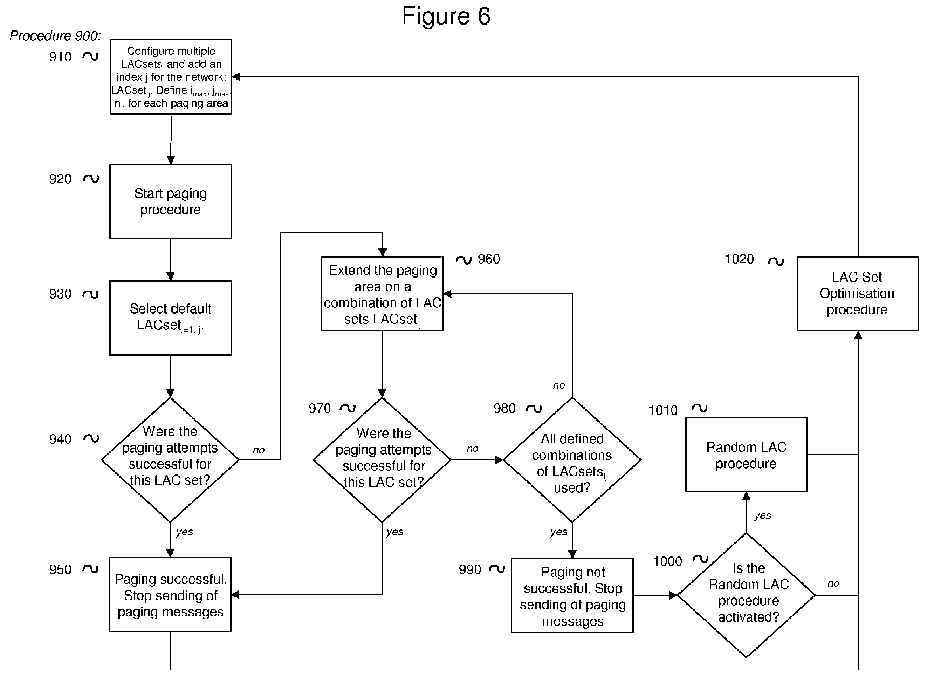

Interconnects are used in national roaming networks to connect both core networks. To avoid the above described problems, paging in one area shall be extended to LACs of both networks covering this area. The first and the second network shall send the paging messages simultaneously in predefined LACs. This step allows improving the paging success rate especially on railway lines or motorways connecting two cities. The claim is to include both networks into the paging pattern shown in procedure 900 in Figure 6. The location update procedure in case of successful paging is then followed by authentication and security mode procedures. Messages from the HLR are still sent to the VLR of the first network and incoming calls cannot be routed to their destination. A solution is defined in the following paragraphs.

**Forwarding of paging requests from a first network to a second network**

According to state-of-the-art technologies, a paging request is available only in one operator's network. It is the scope of the invention to send a message via a signalling link from the MSC of the first network to the MSC of the second network, preferable via the established interconnects. Selecting the right MSC of the second network can be done by defining mapping tables in each MSC or via a separate unit, which has a logical connection to the MSC of the operators participating in national roaming. In the first case - using MSC internal mapping tables - and in the second case - using an external unit - matching paging areas shall preferably be defined by mapping geographical areas of LACs of the first network onto LACs of the second network and vice versa. This procedure allows to use the paging pattern described above but also to consider overlaying or complementary network areas of more than one operator.

In a specific embodiment of this invention, the request of paging in the second network shall be initiated from the HLR of the first network and sent via the HLR of the second network to the MSC of the second network. The selection of the correct MSC shall be done (a) via the MSC using an internal mapping table or (b) via the external unit.

**Procedure of Intelligent Paging in National Roaming Networks**

In step 910 of Figure 6, the multiple LAC sets described in step 410 of Figure 2 for one network, are extended by a further index j representing the network. For example, $LACset_{11}$ represents the first LAC set of the first network. The first and second network are preferentially identified by their Mobile Network Codes (MNCs). Extension to more than two networks in national roaming scenarios is possible. In this step 910 also the maximum number of networks $j_{max}$ shall be defined. The maximum number $n_i$ of paging attempts for the LAC set i shall be used identically for all networks or, in a further embodiment of this invention, it shall be defined separately for each network j.

The paging procedure in Figure 6 is initiated in step 920. For the first paging attempt, the network j shall be selected in which the user was most recently registered. For this network j the default LAC set i=1 shall be selected and paging messages shall be sent in this $LACset_{i=1,j}$ (step 930). Step 940 verifies whether the paging attempts were successful. They were successful, if the paged terminal responds on the received paging message. In this case, the network shall stop sending paging messages (step 950).

If the result of query 940 is "no", i.e. the first paging attempts were not successful, the paging area shall be extended by adding one or more LAC sets according to a predefined pattern. For this national roaming scenario, the added LAC set is preferentially a LAC set of the second network. If $LACset_{11}$ was used for the first paging attempt, the first LAC set of the second network j=2 shall preferentially be added, i.e. paging messages shall be sent in the following areas: $LACset_{11}$ and $LACset_{12}$.

In step 970, it shall be verified whether the subscriber was successfully paged. If the paging attempts were successful, sending of further paging messages is stopped in step 950 and this information shall be used for the optimisation procedure of the LAC sets described in step 1020.

If the output of the query in step 970 is "no", i.e. the last paging attempt was not successful, a further query follows in step 980 to verify whether all defined combinations of LAC sets have already been used for paging. If not, the next combination of LAC sets shall be selected in step 960.

If the result of step 980 is "yes", i.e. all defined combinations of LAC sets have already been used, the paging attempts on these LACs failed and the paging procedure shall be stopped in step 990.

In both cases, successful paging (step 950) and unsuccessful paging (step 990), the gained information shall be used as input for the continuous optimisation of the LAC sets in step 1020.

In step 1000, it shall be verified whether the Random LAC procedure (module 2) is activated. If yes, randomly chosen LACs of both networks shall be selected and paging shall be executed on these LAC sets in step 1010. Information about successful or not successful paging attempts in these LAC sets shall be provided as input to the LAC set optimisation procedure in step 1020. The LAC set optimisation procedure described in module 3 shall be extended by a further dimension, the network j and the optimisation procedure shall take into consideration LAC sets of both networks.

In a further embodiment of this invention, the transition matrices for both or multiple networks shall depend on the increments of the common network, i.e. on the progress of network consolidation. In particular, the definition of LAC sets covering cells of both networks shall depend on the network consolidation status.

In state-of-the-art technologies, a VLR/HLR query of the subscriber's last cell is executed. In one embodiment of this invention, an automised procedure shall be used using statistics of the paging success rate and statistics from radio network planning.

**General aspects**

**Network entities**

The described Intelligent Paging procedures shall be applied in the CS/PS core network, in the Internet Protocol (IP) Multimedia Subsystem (IMS) core network and they shall be supported by the radio network. In state-of-the-art 3GPP technologies, paging is restricted to the area covered by the relevant core network entity, e.g. an MSS area. The scope of this invention is to bypass this limitation by exchanging LAC statistics and particularly the results of the "LAC Set Optimisation procedure" (module 3) and "Paging in National Roaming Networks" procedure (module 4) via an inter-MSS communication. In one embodiment of this invention, the 3GPP Nc interface between two MSS shall be used to exchange LAC sets and their continuous updates between several MSSs. This procedure allows the generation of inter-LAC statistics.

In a further embodiment of this invention, the database 130 in Figure 1 shall be configured as a central database that includes LAC configurations and statistics of each MSS area. This central database shall be accessible by each MSS. Updates of the LAC sets as a result of the continuous LAC Set Optimisation procedure in one area, shall be transferred to this central database and shall be accessible for each MSS of the network. The information shall also be exchanged between the CS and PS core network.

In addition, an exchange of this information via several technologies is in the scope of this invention. The exchange of this information between the MSS and the Mobility Management Entity (MME) for LTE shall preferentially be done via the Sv interface for Single Radio Voice Call Continuity (SRVCC) and via the SGs interface for Short Message Service (SMS), Circuit Switched Fallback (CSFB), and for the combined attach. In LTE networks, speech services are handled in the IMS system that is connected to the MSS via the Mg interface (towards the IMS Call Session Control Function, I-CSCF), via the Mj interface from IMS Breakout Gateway Control Function (BGCF) and the Mw/12 interface from SRVCC- enhanced MSS (eMSS) to the Access Transfer Control Function (ATCF) in the Session Border Controller (SBC). The connection between the IMS and Packet Data Network (PDN) Gateway (PGW) / LTE Serving Gateway (SGW) is realised via the Rx interface to the Policy and Charging Rules Function (PCRF) and via the Gx interface to the PGW/SGW. The SGI interface is used for the connection between the PGW/SWG and SBC (Gm for SIP and Mb for Real-time Transport Protocol (RTP)).

The basic principle of this invention is the exchange of LAC set optimisations via the network including different network technologies and different domains, PS and CS. Data temporarily stored in the VLR shall be used and transferred to the Intelligent Paging platform.

**Technical solution for forwarding the paging request to further core network entities**

A problem to be solved is how to pass the waiting paging request from one MSS to another MSS. As an example, a national roaming network shall be considered. The paging request is waiting in the MSS of a first network and shall be transferred to an MSS of a second network.

- In a preferred embodiment, this paging request shall be transferred via a signalling message on the inter-connects between two Gateway MSSs or via the Nc interface between two MSSs.

- In another embodiment of this invention, the exchange of information for waiting paging requests as well as the results of the LAC Set Optimisation procedure shall be done via the HLR.

In the IMS system, the Interconnection Border Control Function (I-BCF) is used for the interface to other IMS networks. For a user in another IMS network, this transfer of data and signalling connections to the other IMS network is organised via the I-BCF. One embodiment of this invention proposes the I-BCF to transfer paging requests and the results of the LAC Set Optimisation procedure to other IMS networks.

In the IMS system, the I-BGF is used by analogy to the IP-Multi-Media Gateway (IM-MGW). This I-BGF is used to transfer data traffic to other IMS networks. Traffic to and from other IMS networks is transferred to the packet-switched network entities of the home IMS network (e.g. gateway GPRS support node (GGSN), System Architecture Evolution Gateway (SAE-GW)) or to the IM-MGW.

To solve the problem how the MSS B gets the information that paging shall be executed from MSS A, one master and one slave MSS shall be defined. For this purpose, the HLR/VLR plays an important role for transferring the paging information from MSS A to MSS B. The present invention provides a solution by sending a location update complete message from the HLR to the new VLR in an Information Element, signalling message or via a dedicated data connection. During low traffic periods, the VLR shall transfer these inter-VLR information to the HLR. This allows paging also for inter-MSS transitions (LAC1 → LAC2).

**Terminal supported LAC Set Optimisation procedure**

The LAC Set Optimisation procedure shall also be supported by the mobile terminal. In state-of-the-art technologies, after the location update procedure, the terminal listens only to frequencies belonging to cells of the new MSS.

The scope of this invention is that the terminal analyses the measurement report. If it identifies a suited cell, the terminal shall send a location update on the desired cell. A cell is classified as suited, if receive level and - where applicable - receive quality exceed a minimum threshold minLev and minQual, respectively. The terminal shall inform the network about the cell identity and LAC in which it will shortly be reachable. The cell identity and LAC information is also retrieved from cell reselection procedures. Hence, the terminal supported LAC Set Optimisation procedure is applicable for various types of cell changes including handover and cell reselection.

In state-of-the-art technologies, forbidden LACs are stored in the mobile terminal in a list of forbidden LACs for roaming. The terminal does not register in a cell belonging to the forbidden LAC list.

In a preferred embodiment of this invention, an outward paging request shall also be sent to other networks when the terminal sends the preannouncement about the cell identity and LAC in which it will soon be reachable. The forbidden LAC restriction shall be suspended and paging shall be extended to LACs of other network operators.

A further problem in state-of-the-art technologies is that - being in idle mode - the terminals act autonomously. Cell identities and LACs are read from the measurement report, however, they are not reported to higher network entities, e.g. the MSS. To overcome this problem, this invention proposes that the mobile terminal sends in a signalling message or dedicated data connection the information of a well-suited cell identity and LAC to the core network elements. This procedure is part of the terminal supported LAC Set Optimisation procedure in which the terminal's input is used for the LAC Set Optimisation procedure described in this invention.

### Interaction between the intelligent Paging platform and the state-of-the-art 3GPP mobile network

According to the present invention, the Intelligent Paging platform (100 in Figure 1) uses input from the mobile network 200:

- The **paging success rate** (210) for the current LAC: This information is present in the MSS and shall in future be used in the LAC Set Optimisation procedure.
- **Paging load** (220): The traffic load on the paging channels is known in the RAN network entities BSC / Packet Control Unit (PCU) for 2G, RNC for 3G and evolved NodeB (eNodeB) for LTE/LTE-A. These network entities are connected to the core network and the information about the current load on the paging channels shall be transferred via the core network to the Intelligent Paging platform 100.
- **Mobility database** (230): The European Patent (EP) 2 773 149 B1 presents a method for optimising mobility management in cellular networks. The basic principle is a database for successful and unsuccessful cell changes and the generation of the target cell list based on the **history of successful cell changes.** These data shall be used as input to the LAC Set Optimisation procedure for including or excluding specific cells to or from the LAC area.

The history of successful cell changes shall be used to optimise the sequence of the LAC sets used for paging in the LAC Set Optimisation procedure.

The information of unsuccessful paging of a specific subscriber shall be temporarily stored in the database and forwarded to a second MSS. Transferring this information to other MSSs provides an acceleration of the paging duration: If the mobile terminal has executed a location update procedure in the meantime, the new MSS has already received this information from the previous MSS and the paging procedure is completed faster.

- **LAC update statistics** (240): The exchange of the LAC sets and statistics for LAC updates shall be done between the mobile network (200) and the Intelligent Paging platform (100) via the Input/Output unit (110).
- **VLR/HLR data** (250): Data of the location of a terminal stored in **VLR and HLR** shall be transferred to the Intelligent Paging platform and used for the selection of the sequence of LAC sets for paging. Use-case: If the last cell, in which the terminal was connected is in the vicinity of a port in city A and the HLR information refers to city B as the home location of the subscriber, LACs of city B shall be part of the LAC set used for paging this subscriber. A mobile that is not switched off while travelling e.g. by ship from city A to B can then immediately be paged in city B.
- Statistics from **public means of transportation** combined with daytime shall be used as input to the LAC Set Optimisation procedure. Analysing this information can improve the paging success rate and reduce the setup time of a mobile terminated connection for commuters: If paging in the last LAC area during rush hour was not successful, LAC areas covering the destination of the public transportation means shall be added to the LAC set.
- **Radio network information** (260): Information about the topological environment in the radio access network shall be sent from the mobile network (200) and the relevant network planning tools via the Input/Output unit (110) to the Intelligent Paging platform (100). This includes cells flagged for various speed environments.
- **Trace data** (270): Trace data of test mobiles shall be considered for an optimisation of the LAC set sequence.
- **Self-Optimising Network system** (280): Additional input to the Intelligent Paging platform (100) shall be provided from the SON system. Neighbourhood relationships can be defined either central in the mobile network (200), in a SON system, or as a combination of both. The updated neighbourhood relationships shall be transferred from the SON system via the mobile network (200) and the Input/Output unit (110) to the Intelligent Paging platform (100).
- **Location:** If the information of the last location of the terminal is known, the LAC(s) covering this geographical area shall be added to the LAC set.
- Statistics from the **individual motion profile.** In many days, mobile subscribers follow a similar mobility scheme. They leave their house in the morning in cell A, move to their working place in cell B and return in the evening to cell A. In one embodiment of this invention, a user or terminal specific profile shall be generated and stored in a database. From this database, information shall be retrieved to configure the best-suited LAC set for this subscriber or terminal. It is an individual configuration of cells to a user/terminal-based LAC with the aim of achieving the shortest possible paging duration. Data privacy and data protection have to be guaranteed. A use case is IoT, in which a Subscriber Identity Module (SIM) card is seldom paged, but typically moved from cell A, via cell B to cell C in a manufacturing hall. The three cells A, B, and C might be part of two separate LAC areas for the standard mobile network, e.g. cell A and B being part of LAC 1 and cell C being part of LAC 2. A tailored solution for the reachability of this SIM card is the generation of LAC 3 that includes only these three cells. Paging of this SIM card shall be done individually on this LAC 3 and the first paging attempt might be sufficient to successfully page the SIM card. The time for connection establishment to this SIM card can be reduced.

- **Adaptation of the technologies used for paging:** This invention proposes a procedure that adapts the network technologies used for paging according to the paging success rate. As part of the LAC Set Optimisation procedure, paging shall first be started in one technology and in case that paging was not successful in this technology, paging shall be extended to further network technologies.

- **Adaptation of the network operators for paging:** In national roaming networks, the paging procedure shall be started for one operator's network, defined by the Mobile Network Code (MNC). If paging was not successful, it shall be extended to the network of a second (or third etc.) network operator, defined by another MNC. For roamers having potentially access to all network operators in a foreign country, a LAC optimisation procedure shall be applied to ramp-up the LAC set with LACs of more than one operator.

**Benefit of the invention**

The major benefit of this invention is the increase of the paging success rate. This is an enabler for new services and applications and even the prerequisite for enabling new technologies. For vehicular communication and in the next step autonomous driving, ultra-high reachability is required.

A further benefit is the faster setup for mobile terminating services. Typical intervals of subsequent paging attempts are in the range of several seconds. The LAC optimisation procedure described in this invention allows a fast exchange of the LAC sets. If the terminating subscribers can be reached already in the second paging attempt instead of the third paging attempt, a significant performance gain is achieved. With the introduction of new services in LTE, LTE-A, or the upcoming 5G technology, considerably low response times are required. A substantial contribution is provided by the faster setup procedure in this invention.

The invention provides high reachability for mobile terminals that are not kept in active mode for energy saving reasons. This saves battery power for use cases in which battery life time is an essential aspect while simultaneously a fast reachability, e.g. for messages or e-mails is required.

Additional benefit is provided for the operability of mobile networks. Automation of the paging handling simplifies its use.

**Summary**

This invention proposes a full flexible concept for paging in 3GPP networks.

1. Introduction of an Intelligent Paging platform consisting of hardware and software that shall be used to import paging specific data from the mobile network, to process these data with dedicated algorithms and to modify the paging procedures to be used by the mobile network.
2. Introduction of a dynamic LAC extension and LAC replacement procedure based on the paging success rate.

    a. Definition of LAC areas to a LAC set and definition of the chronological sequence for executing paging in different LAC sets.
    b. A threshold based concept is defined to exchange the sequence of the LAC set if the filtered number of paging attempts in a first LAC set exceeds an upper threshold of this LAC set and the filtered number of paging attempts in a subsequent second LAC set is lower than a lower threshold of this second LAC set.
    c. Ramp-up procedure for the number of LACs to be paged.
    d. Definition of dynamic paging areas including cells of multiple RATs.
    e. Automatic generation of LAC set updates for multiple network technologies based on the geographical distances of base stations from a master position.
    f. Introduction of a terminal-supported LAC set optimisation procedure.
    g. Using the history of successful cell changes (mobility database), trace data of test mobiles and data from SON systems for optimising the LAC sets.
    h. Environment and speed dependent sequence of LAC sets.

i. Realisation of a procedure for the immediate change of the LAC set.
j. Definition of individual LAC sets based on the terminals motion profile for IoT services.

3. Combining LACs of multiple network operators in the paging pattern for improving the paging success rate in national roaming networks.

a. Definition of a master MSS for an inter-PLMN exchange of paging messages and statistics.
b. Procedure for forwarding paging requests from a first network to a second network.
c. Combination of paging in national roaming networks with the LAC set optimisation procedure.
d. Introduction of mapping tables for simultaneous or subsequent paging in multiple networks.

4. Introduction of a random LAC procedure as a last chance to reach the subscriber and for improving the LAC sets in dynamically changing network configurations.

a. Combination of the random LAC procedure with the paging procedure in national roaming networks.
b. Identification of suited LACs that were not considered by manual or automated LAC planning.

5. Introduction of a threshold based procedure to send paging repetitions depending on the traffic load on the paging channels to optimise the trade-off between paging success and capacity.

a. Definition of QoS/QCI based paging timers to differentiate in the defined procedures between various services and users.
b. Generation of location dependent paging periods depending on the paging success rate.
c. Use of network statistics and neighbourhood relationships planned in radio network planning tools for selecting the repetition times of paging messages.

6. A threshold based load dependent channel reconfiguration procedure between traffic channels and paging channels.
7. Inter-MSS exchange of LAC statistics and paging requests and an exchange between the CS and PS domains of the core network and IMS system.

**Abbreviations**

| | |
|---|---|
| 2G | Second Generation |
| 3G | Third Generation |
| 3GPP | 3rd Generation Partnership Project |
| 5G | Fifth Generation |
| ARP | Allocation/Retention Priority |
| ATCF | Access Transfer Control Function |
| BGCF | Breakout Gateway Control Function |
| BSC | Base Station Controller |
| BSS | Base Station System |
| BTS | Base Transceiver Station |
| CCCH | Common Control Channel |
| CS | Circuit-Switched |
| CSCF | Call Session Control Function |
| CSFB | Circuit Switched Fallback |
| eMSS | enhanced Mobile Switching Center Server |
| eNodeB | evolved NodeB |
| EP | European Patent |
| GGSN | Gateway GPRS Support Node |
| GPRS | General Packet Radio Service |
| GSM | Global System for Mobile Communications |
| HLR | Home Location Register |
| I-BCF | Interconnection Border Control Function |
| I-CSCF | IMS Call Session Control Function |

IM-MGW    IP-Multi-Media Gateway
IMS       IP Multimedia Subsystem
IMSI      International Mobile Subscriber Identity
I/O       Input/Output
IoT       Internet of Things
IP        Internet Protocol
LAC       Location Area Code
LTE       Long Term Evolution
LTE-A     Long Term Evolution Advanced
MME       Mobility Management Entity
MNC       Mobile Network Code
MOC       Mobile Originated Call
MSC       Mobile-services Switching Centre
MSS       Mobile Switching Center Server
MTC       Mobile Terminated Call
NodeB     UMTS base station
PCCCH     Packet Common Control Channel
PCRF      Policy and Charging Rules Function
PLMN      Public Land Mobile Network
PS        Packet-Switched
QCI       QoS Class Identifier
QoS       Quality of Service
PCH       Paging Channel
PCU       Packet Control Unit
PDCCH     Physical Downlink Control Channel
PDN       Packet Data Network
PDSCH     Physical Downlink Shared Channel
PGW       Packet Data Network Gateway
P-RNTI    Paging Radio Network Temporary Identifier
RAN       Radio Access Network
RAT       Radio Access Technology
RNC       Radio Network Controller
RTP       Real-time Transport Protocol
SAE-GW    System Architecture Evolution Gateway
SBC       Session Border Controller
S-CCPCH   Secondary Common Control Physical Channel
SGW       Serving Gateway
SIM       Subscriber Identity Module
SMS       Short Message Service
SON       Self-Optimising Network
SRVCC     Single Radio Voice Call Continuity
TMSI      Temporary Mobile Subscriber Identity
UMTS      Universal Mobile Telecommunications System
VLR       Visitor Location Register

**Claims**

**1.** A method of paging a mobile terminal in a mobile cellular network (200) including the steps of

a. defining a plurality of LAC/TAC sets in a temporal order (410), wherein each LAC/TAC set includes at least one LAC/TAC area consisting of a certain number of cells,
b. transmitting paging messages (420) in the cells defined in the LAC/TAC set corresponding to the first LAC/TAC set (430) of the given temporal order via at least one paging channel,
c. repeating step b. for the subsequent LAC/TAC set (460) according to the given temporal order in case the paging procedure was not successful (440), wherein the paging messages in the cells for the current LAC/TAC set are retransmitted for a predefined number n of times wherein the number n can be set for each LAC/TAC set individually,

**characterised in that** a period between the retransmissions of paging messages (630) for at least one LAC/TAC set is automatically set dependent on at least one of the actual load on the used paging channel (610) or the maximum capacity of the used paging channel or the priority of the mobile terminal or service.

2. The method according to claim 1 wherein at least one subsequent LAC/TAC set includes all LAC/TAC areas of the previous LAC/TAC set plus at least one additional LAC/TAC area.

3. The method according to any of the preceding claims wherein at least one subsequent LAC/TAC set corresponds to the previous LAC/TAC set wherein at least one LAC/TAC area has been replaced by another LAC/TAC area.

4. The method according to any of the preceding claims wherein the period between the retransmissions is decreased in case of a lower load and/or a higher priority and increased in case of a higher load and/or lower priority.

5. The method according to claim 4 wherein a minimum and/or maximum period value for an allowable period range is set, wherein the minimum period value is set to an appropriate value to overcome typical short term coverage holes, such as temporary fading notches or slow fading effects, and/or the maximum period value is set dependent on the service and/or according to available statistics regarding the success rate of former paging attempts at the expected location of the mobile terminal.

6. The method according to any of claims 4 and 5 wherein a delayed retransmission of a paging message is awarded with credit points for each mobile terminal individually wherein the amount of awarded credit points increases in conjunction with a larger delay of the retransmission and wherein mobile terminals are prioritized for retransmission of paging messages according to their credit points.

7. The method according to any of the preceding claims wherein in case the load on the paging channel exceeds a certain threshold retransmission of paging messages is performed for mobile terminals of high priority with a period between the minimum and maximum period value wherein retransmission of low priority mobile terminals is allowed to exceed the maximum period value.

8. The method according to any of the preceding claims wherein a reconfiguration of paging channels is triggered in case the current load on at least one paging channel exceeds a predefined threshold wherein the reconfiguration includes reconfiguration of traffic channels to common control channels used as paging channels to increase the available capacity of the paging channels wherein a hysteresis is used for triggering channel reconfiguration and/or maximum values for the allowable number of reconfiguration processes including a reconfiguration of traffic channels to common control channels and vice versa.

9. The method according to any of the preceding claims wherein a Random LAC/TAC procedure is triggered during which the subsequent LAC/TAC set for transmission of paging messages is randomly selected from the plurality of LAC/TAC sets.

10. The method according to any of the preceding claims wherein a counter for each LAC/TAC set is defined counting the number of paging attempts performed for the respective LAC/TAC set on a subscriber basis wherein a filtering operation is applied to the counted number of paging attempts per LAC/TAC set.

11. The method according to claim 10 wherein a LAC/TAC set Optimisation procedure is conducted in order to reorder the temporal order of the plurality of LAC/TAC sets, wherein the temporal order of the LAC/TAC sets is adapted with regard to the environment of the mobile terminal and/or to a stored motion profile of the mobile terminal and/or to the counted number of paging attempts and/or to the calculated paging success rate wherein the temporal order of a first and second LAC/TAC set is switched in case the counter value of the first LAC/TAC set exceeds an upper threshold and the counter value of the second LAC/TAC set is lower than a lower threshold.

12. The method according to claim 11 wherein a paging success history and/or a history of successful cell changes and/or trace data of test mobiles and/or data from Self-Optimising Network systems is evaluated and considered in the LAC set Optimisation procedure to reorder the temporal order of the plurality of LAC sets.

13. The method according to any of claims 11 or 12 wherein the sequence of switching from a first LAC set to a second LAC set is defined by a ramp-up pattern based on the results of the LAC set Optimisation procedure, wherein the ramp-up pattern defines the number of LACs after a previous unsuccessful paging attempt.

**14.** The method according to any one of the preceding claims wherein the configuration of one or multiple cells in one or multiple network technologies to a LAC area and the configuration of one or several LAC areas to a LAC set is updated periodically based on the geographical distances of base stations from a defined master position.

**15.** The method according to any of claims 11 to 14 wherein the terminal analyses a measurement report and identifies a suited target cell for mobility and subsequently informs the network about the cell identity and LAC in which it will shortly be reachable, wherein the network uses the information received from the terminal for the LAC set Optimisation procedure.

**16.** The method according to any of the preceding claims wherein at least one of the plurality of LAC/TAC sets includes cells of different Radio Access Technologies, RAT, and/or of a first and a second mobile cellular network, wherein in case of a LAC/TAC set referring to cells of a second mobile cellular network a paging request is sent from the first mobile cellular network to the node of the second mobile cellular network that is responsible for the transmission of paging messages and wherein the appropriate node is selected by way of a matching table associating individual LAC/TAC areas of the first mobile cellular network with cells/nodes of the second network.

**17.** A mobile cellular network (200) adapted for carrying out the method according to any of the preceding claims.

**18.** A paging platform (100) housed in a dedicated entity or integrated into an existing network component and including an I/O-Interface (110), a processing unit (120) and a database (130), wherein the platform (100) is adapted to receiving information from the network (200) via the I/O-Interface (110), processing the received information and transmitting the processed information as paging setting data to a network component, **characterized in that** the platform (100) is adapted to perform the method according to any of claims 1 to 16.

**Patentansprüche**

**1.** Verfahren für Funkrufe an ein mobiles Endgerät in einem Mobilfunknetzwerk (200), das die folgenden Schritte umfasst:

    a. Definieren einer Vielzahl von LAC/TAC-Sätzen in einer zeitlichen Reihenfolge (410), wobei jeder LAC/TAC-Satz wenigstens einen LAC/TAC-Bereich beinhaltet, der aus einer gewissen Anzahl von Zellen besteht,
    b. Übertragen von Funkrufnachrichten (420) in den in dem LAC/TAC-Satz definierten Zellen, die dem ersten LAC/TAC-Satz (430) der vorgegebenen zeitlichen Reihenfolge entsprechen, über wenigstens einen Funkrufkanal,
    c. Wiederholen von Schritt b. für den nachfolgenden LAC/TAC-Satz (460) gemäß der vorgegebenen zeitlichen Reihenfolge, falls der Funkrufvorgang erfolglos war (440),

wobei die Funkrufnachrichten in den Zellen für den aktuellen LAC/TAC-Satz eine vordefinierte Anzahl n von Malen erneut übertragen werden, wobei die Anzahl n für jeden LAC/TAC-Satz einzeln festgelegt werden kann, **dadurch gekennzeichnet, dass** ein Zeitraum zwischen den erneuten Übertragungen von Funkrufnachrichten (630) für wenigstens einen LAC/TAC-Satz in Abhängigkeit von wenigstens einer von der tatsächlichen Belastung des verwendeten Funkkanals (610) oder der maximalen Kapazität des verwendeten Funkrufkanals oder der Priorität des mobilen Endgeräts oder Dienstes automatisch festgelegt wird.

**2.** Verfahren nach Anspruch 1, wobei wenigstens ein nachfolgender LAC/TAC-Satz alle LAC/TAC-Bereiche des vorhergehenden LAC/TAC-Satzes sowie wenigstens einen zusätzlichen LAC/TAC-Bereich beinhaltet.

**3.** Verfahren nach einem der vorhergehenden Ansprüche, wobei wenigstens ein nachfolgender LAC/TAC-Satz dem vorhergehenden LAC/TAC-Satz entspricht, wobei wenigstens ein LAC/TAC-Bereich durch einen anderen LAC/TAC-Bereich ersetzt wurde.

**4.** Verfahren nach einem der vorhergehenden Ansprüche, wobei der Zeitraum zwischen den erneuten Übertragungen im Fall einer niedrigeren Belastung und/oder einer höheren Priorität verringert wird und im Fall einer höheren Belastung und/oder einer niedrigeren Priorität vergrößert wird.

**5.** Verfahren nach Anspruch 4, wobei ein minimaler und/oder maximaler Zeitraumwert für einen zulässigen Zeitraumbereich festgesetzt wird, wobei der minimale Zeitraumwert auf einen geeigneten Wert festgesetzt wird, um typische kurzfristige Abdeckungslöcher zu überwinden, wie etwa zeitweilige Schwundkerben oder Langsamschwundeffekte, und/oder der maximale Zeitraumwert in Abhängigkeit von dem Dienst und/oder gemäß verfügbaren Statistiken bezüglich der Erfolgsrate früherer Funkrufversuche an dem erwarteten Standort des mobilen Endgeräts festgesetzt wird.

6. Verfahren nach einem der Ansprüche 4 und 5, wobei für eine verzögerte erneute Übertragung einer Funkrufnachricht für jedes mobile Endgerät einzeln Credit Points vergeben werden, wobei die Menge der vergebenen Credit Points in Verbindung mit einer größeren Verzögerung der erneuten Übertragung zunimmt und wobei mobile Endgeräte für die erneute Übertragung von Funkrufnachrichten entsprechend ihren Credit Points priorisiert werden.

7. Verfahren nach einem der vorhergehenden Ansprüche, wobei im Fall, dass die Belastung des Funkrufkanals einen gewissen Schwellenwert übersteigt, für mobile Endgeräte hoher Priorität mit einem Zeitraum zwischen dem minimalen und dem maximalen Zeitraumwert eine erneute Übertragung von Funkrufnachrichten durchgeführt wird, wobei die erneute Übertragung von mobilen Endgeräten niedriger Priorität den maximalen Zeitraumwert übersteigen darf.

8. Verfahren nach einem der vorhergehenden Ansprüche wobei eine Neukonfiguration der Funkrufkanäle ausgelöst wird, falls die aktuelle Belastung von wenigstens einem Funkrufkanal einen vordefinierten Schwellenwert übersteigt, wobei die Neukonfiguration die Neukonfiguration von Verkehrskanälen zu als Funkrufkanäle verwendeten gemeinsamen Steuerkanälen beinhaltet, um die verfügbare Kapazität der Funkrufkanäle zu erhöhen, wobei eine Hysterese zum Auslösen der Kanalneukonfiguration und/oder maximale Werte für die zulässige Anzahl von Neukonfigurationsprozessen, die eine Neukonfiguration von Verkehrskanälen zu gemeinsamen Steuerkanälen und umgekehrt beinhalten, verwendet wird bzw. werden.

9. Verfahren nach einem der vorhergehenden Ansprüche, wobei ein Zufalls-LAC/TAC-Vorgang ausgelöst wird, während dessen der nachfolgende LAC/TAC-Satz zur Übertragung von Funkrufnachrichten zufällig aus der Vielzahl von LAC/TAC-Sätzen ausgewählt wird.

10. Verfahren nach einem der vorhergehenden Ansprüche, wobei ein Zähler für jeden LAC/TAC-Satz definiert wird, der die Anzahl von Funkrufversuchen zählt, die für den jeweiligen LAC/TAC-Satz auf einer Teilnehmerbasis durchgeführt werden, wobei auf die gezählte Anzahl von Funkrufversuchen pro LAC/TAC-Satz eine Filteroperation angewendet wird.

11. Verfahren nach Anspruch 10, wobei ein LAC/TAC-Satz-Optimierungsvorgang durchgeführt wird, um die zeitliche Reihenfolge der Vielzahl von LAC/TAC-Sätzen umzuordnen, wobei die zeitliche Reihenfolge der LAC/TAC-Sätze mit Bezug auf die Umgebung des mobile Endgeräts und/oder auf ein gespeichertes Bewegungsprofil des mobilen Endgeräts und/oder auf die gezählte Anzahl von Funkrufversuchen und/oder auf die berechnete Funkruferfolgsrate angepasst wird, wobei die zeitliche Reihenfolge eines ersten und eines zweiten LAC/TAC-Satzes im Fall, dass der Zählerwert des ersten LAC/TAC-Satzes einen oberen Schwellenwert übersteigt und der Zählerwert des zweiten LAC/TAC-Satzes niedriger als ein unterer Schwellenwert ist, gewechselt wird.

12. Verfahren nach Anspruch 11, wobei eine Funkruferfolgshistorie und/oder eine Historie erfolgreicher Zellenwechsel und/oder Tracedaten von Testmobilgeräten und/oder Daten von selbstoptimierenden Netzwerksystemen in dem LAC-Satz-Optimierungsvorgang zum Neuordnen der zeitlichen Reihenfolge der Vielzahl von LAC-Sätzen ausgewertet und erwogen wird bzw. werden.

13. Verfahren nach einem der Ansprüche 11 oder 12, wobei die Sequenz des Wechselns von einem ersten LAC-Satz auf einen zweiten LAC-Satz durch ein Erhöhungsmuster auf Basis der Ergebnisse des LAC-Satz-Optimierungsvorgangs definiert wird, wobei das Erhöhungsmuster die Anzahl von LAC nach einem vorhergehenden erfolglosen Funkrufversuch definiert.

14. Verfahren nach einem der vorhergehenden Ansprüche, wobei die Konfiguration von einer oder mehreren Zellen in einer oder mehreren Netzwerktechnologien zu einem LAC-Bereich und die Konfiguration von einem oder mehreren LAC-Bereichen zu einem LAC-Satz periodisch auf Basis der geografischen Entfernungen von Basisstationen von einer definierten Hauptposition aktualisiert werden.

15. Verfahren nach einem der Ansprüche 11 bis 14, wobei das Endgerät einen Messbericht analysiert und eine geeignete Zielzelle für Mobilität ausmacht und anschließend das Netzwerk über Identität und LAC der Zelle, in der es in Kürze erreichbar sein wird, informiert, wobei das Netzwerk die von dem Endgerät empfangenen Informationen für den LAC-Satz-Optimierungsvorgang verwendet.

16. Verfahren nach einem der vorhergehenden Ansprüche, wobei wenigstens einer der Vielzahl von LAC/TAC-Sätzen Zellen von verschiedenen Radio Access Technologies, RAT, FRATT und/oder einem ersten und einem zweiten Mobilfunknetzwerk beinhaltet, wobei im Fall, dass sich ein LAC/TAC-Satz auf Zellen eines zweiten Mobilfunknetzwerks bezieht, eine Funkrufanforderung von dem ersten Mobilfunknetzwerk an den Knoten des zweiten Mobilfunknetzwerks, das für die Übertragung von Funkrufnachrichten zuständig ist, gesendet wird, und wobei der zutreffende Knoten mittels einer Vergleichstabelle ausgewählt wird, die einzelne LAC/TAC-Bereiche des ersten Mobilfunknetzwerks Zellen/Knoten des zweiten Netzwerks zuordnet.

17. Mobilfunknetzwerk (200), das zum Durchführen des Verfahrens nach einem der vorhergehenden Ansprüche ausgeführt ist.

18. Funkrufplattform (100), die in einer dedizierten Einheit untergebracht oder in eine bestehende Netzwerkkomponente integriert ist und eine Ein-/Ausgabeschnittstelle (110), eine Verarbeitungseinheit (120) und eine Datenbank (130) aufweist, wobei die Plattform (100) zum Empfangen von Informationen aus dem Netzwerk (200) über die Ein-/Ausgabeschnittstelle (110), Verarbeiten der empfangenen Informationen und Übertragen der verarbeiteten Informationen als Funkrufeinstelldaten an eine Netzwerkkomponente ausgeführt ist, **dadurch gekennzeichnet, dass** die Plattform (100) zum Durchführen des Verfahrens nach einem der Ansprüche 1 bis 16 ausgeführt ist.

## Revendications

1. Procédé de radiomessagerie d'un terminal mobile dans un réseau cellulaire mobile (200) incluant les étapes de

   a. définition d'une pluralité d'ensembles LAC/TAC dans un ordre temporel (410), dans lequel chaque ensemble LAC/TAC inclut au moins une zone de LAC/TAC composée d'un certain nombre de cellules,
   b. transmission de messages de radiomessagerie (420) dans les cellules définies dans l'ensemble LAC/TAC correspondant au premier ensemble LAC/TAC (430) de l'ordre temporel donné via au moins un canal de radiomessagerie,
   c. répétition de l'étape b. pour l'ensemble LAC/TAC ultérieur (460) selon l'ordre temporel donné en cas d'échec de la procédure de radiomessagerie (440),

   dans lequel les messages de radiomessagerie dans les cellules pour l'ensemble LAC/TAC actuel sont retransmis un nombre de fois n prédéfini dans lequel le nombre n peut être défini pour chaque ensemble LAC/TAC individuellement,
   **caractérisé en ce qu'**une période entre les retransmissions de messages de radiomessagerie (630) pour au moins un ensemble LAC/TAC est définie automatiquement en fonction d'au moins l'une de la charge actuelle sur le canal de radiomessagerie utilisé (610) ou de la capacité maximale du canal de radiomessagerie utilisé ou de la priorité du terminal mobile ou service.

2. Procédé selon la revendication 1 dans lequel au moins un ensemble LAC/TAC ultérieur inclut toutes les zones de LAC/TAC de l'ensemble LAC/TAC précédent plus au moins une zone de LAC/TAC supplémentaire.

3. Procédé selon l'une quelconque des revendications précédentes dans lequel au moins un ensemble LAC/TAC ultérieur correspond à l'ensemble LAC/TAC précédent dans lequel au moins une zone de LAC/TAC a été remplacée par une autre zone de LAC/TAC.

4. Procédé selon l'une quelconque des revendications précédentes dans lequel la période entre les retransmissions est réduite en cas de charge inférieure et/ou de priorité supérieure et augmentée en cas de charge supérieure et/ou de priorité inférieure.

5. Procédé selon la revendication 4 dans lequel une valeur de période minimale et/ou maximale pour une plage de périodes admissible est définie, dans lequel la valeur de période minimale est définie à une valeur appropriée pour pallier des trous de couverture à court terme typiques tels que des encoches de fading temporaire ou des effets de fading lent, et/ou la valeur de période maximale est définie en fonction du service et/ou en fonction des statistiques disponibles concernant le taux de réussite de tentatives de radiomessagerie précédentes au niveau de l'emplacement attendu du terminal mobile.

6. Procédé selon l'une quelconque des revendications 4 et 5 dans lequel des points de crédit sont attribués à une retransmission retardée d'un message de radiomessagerie pour chaque terminal mobile individuellement dans lequel la quantité de points de crédit attribués augmente en conjonction avec un délai de retransmission supérieur et dans lequel des terminaux mobiles sont priorisés pour une retransmission de messages de radiomessagerie en fonction de leurs points de crédit.

7. Procédé selon l'une quelconque des revendications précédentes dans lequel si la charge sur le canal de radiomessagerie dépasse un certain seuil une retransmission de messages de radiomessagerie est réalisée pour des terminaux mobiles à priorité élevée avec une période entre la valeur de période minimale et maximale dans lequel une retransmission de terminaux mobiles à faible priorité est autorisée à dépasser la valeur de période maximale.

8. Procédé selon l'une quelconque des revendications précédentes dans lequel une reconfiguration de canaux de radiomessagerie est déclenchée si la charge actuelle sur au moins un canal de radiomessagerie dépasse un seuil prédéfini dans lequel la reconfiguration inclut une reconfiguration de canaux de trafic en canaux de commande communs utilisés comme canaux de radiomessagerie pour augmenter la capacité disponible des canaux de radiomessagerie dans lequel une hystérésis est utilisée pour une reconfiguration de canal de déclenchement et/ou des valeurs maximales pour le nombre de processus de reconfiguration admissible incluant une reconfiguration de canaux de trafic en canaux de commande communs et vice-versa.

9. Procédé selon l'une quelconque des revendications précédentes dans lequel une procédure de LAC/TAC aléatoire est déclenchée durant laquelle l'ensemble LAC/TAC ultérieur pour une retransmission de messages de radiomessagerie est sélectionnée de manière aléatoire parmi la pluralité d'ensembles LAC/TAC.

10. Procédé selon l'une quelconque des revendications précédentes dans lequel un compteur pour chaque ensemble LAC/TAC est défini, qui compte le nombre de tentatives de radiomessagerie réalisées pour l'ensemble LAC/TAC respectif sur une base d'abonné dans lequel une opération de filtrage est appliquée au nombre de tentatives de radiomessagerie compté par ensemble LAC/TAC.

11. Procédé selon la revendication 10 dans lequel une procédure d'optimisation d'ensemble LAC/TAC est conduite afin de réordonner l'ordre temporel de la pluralité d'ensembles LAC/TAC, dans lequel l'ordre temporel des ensembles LAC/TAC est adapté par rapport à l'environnement du terminal mobile et/ou à un profil de mouvement stocké du terminal mobile et/ou au nombre de tentatives de radiomessagerie compté et/ou au taux de réussite de radiomessagerie calculé dans lequel l'ordre temporel de premier et second ensembles LAC/TAC est commuté si la valeur de compteur du premier ensemble LAC/TAC dépasse un seuil supérieur et la valeur de compteur du second ensemble LAC/TAC est inférieure à un seuil inférieur.

12. Procédé selon la revendication 11 dans lequel un historique de réussite de radiomessagerie et/ou un historique de changements de cellules réussis et/ou de données de trace de mobiles tests et/ou de données provenant de systèmes de réseau d'auto-optimisation est/sont évalué(e)(s) et pris(e)(s) en considération dans la procédure d'optimisation d'ensemble LAC pour réordonner l'ordre temporel de la pluralité d'ensembles LAC.

13. Procédé selon l'une quelconque des revendications 11 ou 12 dans lequel la séquence de commutation d'un premier ensemble LAC vers un second ensemble LAC est définie par un motif d'accélération vers le haut sur la base des résultats de la procédure d'optimisation d'ensemble LAC, dans lequel le schéma d'accélération vers le haut définit le nombre de LAC après une tentative de radiomessagerie infructueuse précédente.

14. Procédé selon l'une quelconque des revendications précédentes dans lequel la configuration d'une ou de multiples cellules dans une ou de multiples technologies de réseau dans une zone de LAC et la configuration d'une ou de plusieurs zones de LAC dans un ensemble LAC est mise à jour périodiquement sur la base des distances géographiques de stations de base à partir d'une position maître définie.

15. Procédé selon l'une quelconque des revendications 11 à 14 dans lequel le terminal analyse un rapport de mesure et identifie une cellule cible adaptée pour la mobilité et informe ultérieurement le réseau de l'identité de la cellule et du LAC dans lequel elle va bientôt pouvoir être atteinte, dans lequel le réseau utilise les informations reçues du terminal pour la procédure d'optimisation d'ensemble LAC.

**16.** Procédé selon l'une quelconque des revendications précédentes dans lequel au moins l'un de la pluralité d'ensembles LAC/TAC inclut des cellules de différentes technologies d'accès radio, RAT, et/ou des premier et second réseaux cellulaires mobiles, dans lequel si un ensemble LAC/TAC fait référence à des cellules d'un second réseau cellulaire mobile une demande de radiomessagerie est envoyée du premier réseau cellulaire mobile au nœud du second réseau cellulaire mobile qui est responsable de la transmission de messages de radiomessagerie et dans lequel le nœud approprié est sélectionné au moyen d'une table correspondante associant des zones de LAC/TAC individuelles du premier réseau cellulaire mobile à des cellules/nœuds du second réseau.

**17.** Réseau cellulaire mobile (200) adapté à mettre en oeuvre le procédé selon l'une quelconque des revendications précédentes.

**18.** Plateforme de radiomessagerie (100) reçue dans une entité dédiée ou intégrée à une composante de réseau existante et incluant une interface E/S (110), une unité de traitement (120) et une base de données (130), dans laquelle la plateforme (100) est adaptée à recevoir des informations du réseau (200) via l'interface E/S (110), à traiter les informations reçues et à transmettre les informations traitées sous la forme de données de définition à une composante de réseau, **caractérisée en ce que** la plateforme (100) est adaptée à réaliser le procédé selon l'une quelconque des revendications 1 à 16.

## Figure 1

Intelligent Paging modules ∿ 300

- Dynamic Paging ∿ 310
- Random LAC procedure ∿ 320
- LAC Set Optimisation procedure ∿ 330
- Paging in National Roaming Networks ∿ 340

Intelligent Paging platform ∿ 100

Processor ∿ 120

I/O ∿ 110

Memory/ Database ∿ 130

Mobile network ∿ 200

- Paging success rate ∿ 210
- Paging load and capacity ∿ 220
- Mobility database ∿ 230
- LAC update statistics ∿ 240
- VLR/HLR data ∿ 250
- Radio network information ∿ 260
- Trace data ∿ 270
- SON system ∿ 280

EP 3 481 116 B1

# Figure 2

EP 3 481 116 B1

*Procedure 400:*

- **410** — Configure multiple LACsets$_i$ and parameters $i_{max}$, $n_i$ for each paging area
- **420** — Start paging procedure
- **430** — Select the default LACset$_{i=1}$.
- **440** — Were the paging attempts successful for this LAC set?
- **460** — Increment i of the LACset$_i$ and send paging messages.
- **470** — Were the paging attempts successful for this LAC set?
- **480** — Maximum value $i_{max}$ reached?
- **450** — Paging successful. Stop sending of paging messages
- **490** — Paging not successful. Stop sending of paging messages
- **500** — Is the Random LAC procedure activated?
- **510** — Random LAC procedure
- **520** — LAC Set Optimisation procedure

# Figure 3

*Procedure 600:*

610 〜 Relative load on paging channels      Paging repetition delay 〜 630

〜 680

pagingLoadThr2

620 〜

pagingLoadThr1

100%

80%

60%

40%

20%

0%

〜 670

〜 660

high priority services

low priority services

high priority services

all services

$t_{max}$ 〜 650

$t_{min}$ 〜 640

0 s

EP 3 481 116 B1

30

# Figure 4

Procedure 700:
710

740

| Paging procedure | Number of paging attempts | ALPHA | | | | |
|---|---|---|---|---|---|---|
| | | 0,2 | 0,4 | 0,6 | 0,8 | 0,3 Mod |
| 1 | 2 | 0,40 | 0,80 | 1,20 | 1,60 | 0,60 |
| 2 | 3 | 0,92 | 1,68 | 2,28 | 2,72 | 1,32 |
| 3 | 3 | 1,34 | 2,21 | 2,71 | 2,94 | 1,82 |
| 4 | 2 | 1,47 | 2,12 | 2,28 | 2,19 | 1,88 |
| 5 | 5 | 2,18 | 3,27 | 3,91 | 4,44 | 2,81 |
| 6 | 3 | 2,34 | 3,16 | 3,37 | 3,29 | 2,87 |
| 7 | 4 | 2,67 | 3,50 | 3,75 | 3,86 | 3,21 |
| 8 | 2 | 2,54 | 2,90 | 2,70 | 2,37 | 2,85 |
| 9 | 3 | 2,63 | 2,94 | 2,88 | 2,87 | 2,89 |
| 10 | 3 | 2,70 | 2,96 | 2,95 | 2,97 | 2,92 |
| 11 | 4 | 2,96 | 3,38 | 3,58 | 3,79 | 3,25 |
| 12 | 5 | 3,37 | 4,03 | 4,43 | 4,76 | 3,77 |
| 13 | 5 | 3,70 | 4,42 | 4,77 | 4,95 | 4,14 |
| 14 | 6 | 4,16 | 5,05 | 5,51 | 5,79 | 4,70 |
| 15 | 5 | 4,33 | 5,03 | 5,20 | 5,16 | 4,79 |
| 16 | 2 | 3,86 | 3,82 | 3,28 | 2,63 | 3,95 |
| 17 | 3 | 3,69 | 3,49 | 3,11 | 2,93 | 3,67 |
| 18 | 2 | 3,35 | 2,89 | 2,45 | 2,19 | 3,17 |
| 19 | 4 | 3,48 | 3,34 | 3,38 | 3,64 | 3,42 |
| 20 | 2 | 3,18 | 2,80 | 2,55 | 2,33 | 2,99 |

720     730     750

760

# Figure 5

*Procedure 800:*

810 ∿   LAC set i          LAC set j   ∿ 820

LAC set i axis values (top to bottom): 6, 5, 4, 3, 2, 1

LAC set j axis values (top to bottom): 6, 5, 4, 3, 2, 1

∿ 830

**avgNumPagingAttemptsPerUserLacSet_i** (at level between 5 and 4)

pagingCounterUpperThresholdLacSet_i (at 4)

pagingCounterLowerThresholdLacSet_i (at 2)

pagingCounterUpperThresholdLacSet_j (at 3)

pagingCounterLowerThresholdLacSet_j (at 2)

**avgNumPagingAttemptsPerUserLacSet_j** (below 2)

# Figure 6

*Procedure 900:*

910 — Configure multiple LACsets$_i$ and add an index j for the network: LACset$_{ij}$. Define i$_{max}$, j$_{max}$, n$_i$, for each paging area

920 — Start paging procedure

930 — Select default LACset$_{i=1, j}$.

940 — Were the paging attempts successful for this LAC set?

950 — Paging successful. Stop sending of paging messages

960 — Extend the paging area on a combination of LAC sets LACset$_{ij}$

970 — Were the paging attempts successful for this LAC set?

980 — All defined combinations of LACsets$_{ij}$ used?

990 — Paging not successful. Stop sending of paging messages

1000 — Is the Random LAC procedure activated?

1010 — Random LAC procedure

1020 — LAC Set Optimisation procedure

EP 3 481 116 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080293437 A1
- US 20140155109 A1
- WO 0145449 A1
- WO 2008011779 A1
- EP 2773149 B1

### Non-patent literature cited in the description

- **M. MOULY ; M.-B. PAUTET.** The GSM System for Mobile Communications. Telecom Publishing, 1992
- Technical Specification Group Core Network; Technical Report on Pre-paging. *3GPP TR 23.908,* 2001, http://www.3gpp.org
- Technical Specification Group Core Network (CN); Mobile radio interface layer 3 specification, Core network protocols - Stage 2. *3GPP TS 23.108,* 2011, http://www.3gpp.org
- Technical Specification Group Core Network and Terminals; Non-Access-Stratum (NAS) protocol for Evolved Packet System (EPS); Stage 3. *3GPP TS 24.301,* 2013, http://www.3gpp.org
- Technical Specification Group Radio Access Network; Evolved Universal Terrestrial Radio Access (E-UTRA); User Equipment (UE) procedures in idle mode. *3GPP TS 36.304,* 2013, http://www.3gpp.org
- Technical Specification Group Radio Access Network; Evolved Universal Terrestrial Radio Access (E-UTRA); Radio Resource Control (RRC); Protocol specification. *3GPP TS 36.331,* 2013, http://www.3gpp.org
- Technical Specification Group GSM/EDGE Radio Access Network; General Packet Radio Service (GPRS); Mobile Station (MS) - Base Station System (BSS) interface; Radio Link Control / Medium Access Control (RLC/MAC) protocol. *3GPP TS 44.060,* 2013, http://www.3gpp.org
- GSM Global System for Mobile Communication. Verlag Teubner, 2001
- Quality of Service (QoS) concept and architecture. *3GPP TS 23.107,* 2012, http://www.3gpp.org